# EUROPEAN PATENT SPECIFICATION

(11) **EP 1 306 761 B1**
(45) Date of publication and mention of the grant of the patent: **13.04.2011**
(21) Application number: 01941155.2
(22) Date of filing: 21.06.2001
(51) Int. Cl.: G11B 27/32, G11B 20/12

(54) **FILE MANAGING METHOD**
DATEIVERWALTUNGSVERFAHREN
PROCEDE DE GESTION DES FICHIERS

(30) Priority: 23.06.2000 JP 2000188671; 06.06.2001 JP 2001170443
(43) Date of publication of application: 02.05.2003
(73) Proprietor: Sharp Kabushiki Kaisha, Osaka-shi, Osaka 545-8522 (JP)
(72) Inventor: IWANO, Yuri, Chiba-shi, Chiba 266-0005 (JP); KIZUKI, Hideaki, Chiba-shi, Chiba 263-0044 (JP); KIYAMA, Jiro, Funabashi-shi, Chiba 274-0825 (JP); YAMAGUCHI, Takayoshi, Nagareyama-shi, Chiba 270-0121 (JP); IKEDA, Natsuko, Chiba-shi, Chiba 262-0033 (JP); YAMAMURA, Hiroyuki, Chiba-shi, Chiba 266-0011 (JP); NISHIMURA, Motohide, Kitakyushu-shi, Fukuoka 807-0844 (JP)
(74) Representative: Brown, Kenneth Richard
(86) International application number: PCT/JP2001/005315
(87) International publication number: WO 2001/098905

(56) References cited:
- EP-A- 0 284 037
- EP-A- 0 712 130
- US-A- 5 214 781
- PATENT ABSTRACTS OF JAPAN vol. 018, no. 235 (P-1732), 28 April 1994 (1994-04-28) & JP 06 020442 A (TOSHIBA CORP), 28 January 1994 (1994-01-28)
- PATENT ABSTRACTS OF JAPAN vol. 014, no. 360 (P-1088), 3 August 1990 (1990-08-03) & JP 02 132516 A (MATSUSHITA ELECTRIC IND CO LTD), 22 May 1990 (1990-05-22)
- PATENT ABSTRACTS OF JAPAN vol. 013, no. 586 (P-982), 25 December 1989 (1989-12-25) & JP 01 248358 A (HITACHI LTD), 3 October 1989 (1989-10-03)
- URESH VAHALIA, TRANSLATION: HIDEYUKI TOKUDA ET AL.: 'Saizensen UNIX no kernel' PEARSON EDUCATION 15 May 2000, pages 397 - 414, XP002947546
- MUTSUMI ISHIKAWA: 'Ext3 cs ReiserFS vs XFS' UNIX USER vol. 9, no. 6, 01 June 2000, pages 99 - 108, XP002947547
- JIM GRAY ET AL.: 'Transaction processing: concepts and techniques', 1993, MORGAN KAUFMANN PUBLISHERS, SAN FRANCISCO XP002947548 ISBN 1-55860-190-2 * page 493 - page 525 *

## Description

### Technical Field

The present invention relates to a file management method as to backup and other handling of files on a recording medium.

### Background Art

For recording data for PC usage, AV usage and other purposes onto disk media, a logical filesystem is usually used. Using a logical filesystem makes it possible and easy to manage recorded data as files and construct a directory hierarchy. As examples of logical filesystems, the widely used FAT filesystem, the UDF (universal disk format) introduced for DVDs can be mentioned.

A logical filesystem is a mechanism which records management information including the information for identifying data recorded on a disk and the positional information as to where the data has been recorded on the disk and enables access to files by making an access to these pieces of information. For example, the management information of a logical filesystem includes attribute information such as a filename, creation date of the file, file size, file status and others, and positional information on the disk at which the associated actual data is recorded. There exist various types of logical filesystems such as FAT, UDF and others. These are different in management information structure and attribute information to be managed but are used for the same purpose in terms of enabling an access to the desired data on the disk based on a filename or equivalent information.

There is not any problem at all when a disk using such a logical filesystem is normally used, but in some cases there is a possibility that the information recorded on the disk cannot be read out. For example, the disk is physically damaged by some shocks, or an impact during writing causes inappropriate writing at a wrong position and hence changes the recorded content. For a removal disk, such an accident may occur due to adhesion of smudges on the disk surface.

If problematic sites could be located before data writing onto the disk, it is possible to avoid problematic events occurring by utilizing the defect management function by which recording is performed at an alternate area on the disk in place of the problematic area. However, if an accident occurs after information was written, there occurs the problem that the information cannot be read out from the disk. Though it is troublesome if the recorded data itself cannot be read, it is more problematic if the management information of the aforementioned logical filesystem cannot be read from the disk. If the management information of the logical filesystem for allowing an access to a file becomes unable to be read out due to some reasons, the location where the associated data is recorded becomes unknown even though the data on the disk has not been affected, so it becomes impossible to make an access to that data.

There is little possibility of such an event occurring with a disk used for PC usage. This is because the drive for PC usage is usually used under a physically stable environment. In contrast, in the case of video cameras or other appliances for AV usage using a recording medium of a removal disk type, they are not always used in a physically stable environment. Since a video camera is inherently used to take scenes while being held in the hand, there is a possibility of the disk receiving impacts during data recording if the camera is used while the operator is running or when the camera collides with something. In this way, it is expected that the disk will be used under hard conditions compared to use for PC usage. So it is getting higher the risk that data might become unable to be read out from the disk unexpectedly as stated above.

In order to solve the problem of the data becoming unable to be accessed due to inability of the management information of the logical filesystem, replication of the management information of the logical filesystem is considered to be effective. Actually, even if a certain piece of management information cannot be read out, replication of the management information of the logical filesystem on the disk makes it possible to access the data based on the replicated backup management information.

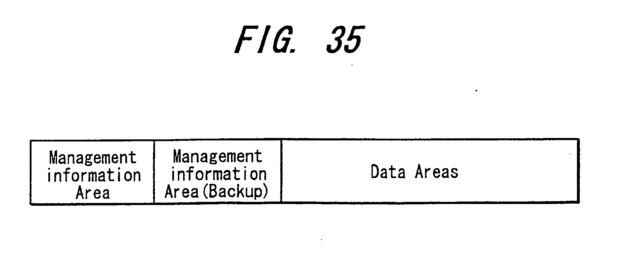

Fig.35 shows this situation. In this filesystem, the area for the management information of the filesystem to be recorded and that for the data are separated so that each will be recorded in its corresponding area on the desk. Since the management information of the filesystem is recorded in the predetermined area separated from the area where the file is actually recorded, the management information will be necessarily recorded within the predetermined area. Accordingly, it is possible to provide redundancy of the management information by preparing a backup area which is constructed under the perfectly same conditions as the management information recording area.

As shown in Fig.35, when the management area and the actual data area are separated beforehand and the management area is replicated so as to provide backup, it is necessary to reserve the management area and the backup management area beforehand. Therefore there is the problem that the maximum number of manageable files will be limited by the size of the management area.

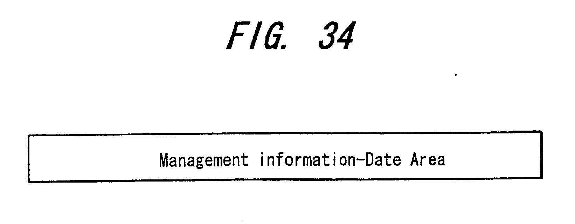

Further, in the aforementioned FAT and UDF filesystems, the management area and data area are recorded in the same region as shown in Fig.34. Since there is no concept of 'management area' in these filesystems, it is impossible to use the technique of replicating the management area as a whole.

The management information of a filesystem is managed so as to configure a directory hierarchy and hence each piece of management information is related (linked based on address locations on the disk) to others in conformity with this directoryhierarchy. Therefore, it is not so easy to replicate the management information. For example, in the management information for managing a directory, address locations of the management information of files and directories defined in the directory are described. Therefore, for providing redundancy by simply duplicating these pieces of management information of the logical filesystem into the predetermined backup area, the addresses on the disk as the linkage information between related pieces of management information, must be modified in accordance with the recorded positions of the management information recorded in the backup area.

With such a configuration, when the original management information is updated at the timing of creation, revision or deletion of a file, the addresses of the backup management information should be updated, needing many procedures to create a backup.

JP 06 020442 describes a fault recovery method for a magneto-optical disk which improves resistance to faults by using directory preservation areas and update history preservation areas alternately. If latent directory information is broken, it is restored based on preceding directory information and update information.

EP 0 712 130 A1 describes producing logical format information of an optical disk based on a volume history, in response to an instruction for finalisation.

The present application is to solve the problems described above, and when an event such as creation, revision or deletion relating to a file or creation or deletion relating to a directory has occurred, the ID information of the file or directory and the position of the file on the disk or the directory information are created as a piece of history information, and this history information is recorded within a history table area, whereby it is possible to easily read a file when its management information cannot be correctly read out and create the backup without the need of complicated procedures.

### Disclosure of Invention

In accordance with the first invention of the present application, the above problems can be solved by a file management method performed by a recording device which is arranged to record input data as a file on a recording medium using a filesystem and to manage each file based on management information at least including recorded positional information of the file on the recording medium, wherein same area (UDF partition) of the filesystem stores the file and the management information, such that the management information is scattered in said same area and is not clearly separated from the file, the method including the steps of: creating in succession history information (HD) as to a file each time an action of addition, revision or deletion of the file on a said recording medium is effected, each history information including recorded positional information of the file on the recording medium and a type of the action on the file, related with file identification information of the file; and recording successively the history information (HD) in a history table area (Backup Area) provided separately from said same area (UDF partition), in the order in which the history information (HD) have been created.

Preferred further features are set out in claims 2 to 11.

Thus, according to the present invention described heretofore, each time an event such as creation, revision or deletion of a file, or creation or deletion of a directory occurs in even a filesystem having no replicating function of the management information of the logical filesystem, history information made up of ID information for allowing access to the corresponding file or directory and the least sufficient information for restoring the management information of the file or directory is simply added to the history table. Further, since pieces of history information are recorded sequentially from the rear end to the front end within the history table recording area, this configuration provides easy access to the history information in the history table.

With this configuration, it becomes possible to allow access to a file or directory and restore the management information by accessing the history table as the backup information when the management information of the logical filesystem has becomes unable to be read out.

Moreover, since the history table as the backup information is added each time an event such as creation, revision or deletion of a file or directory occurs, it can be used as the update history information of files and directories.

### Brief Description of Drawings

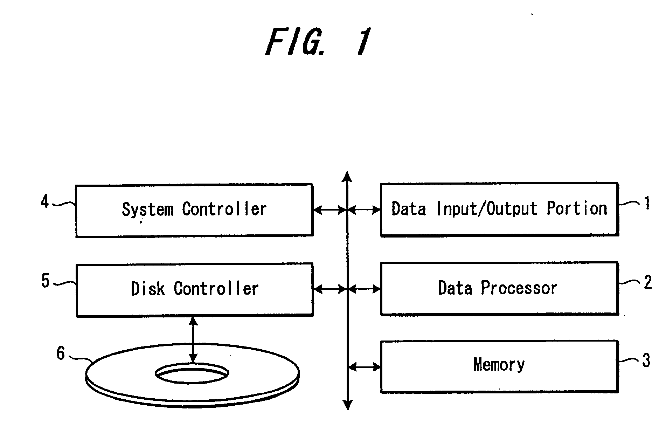

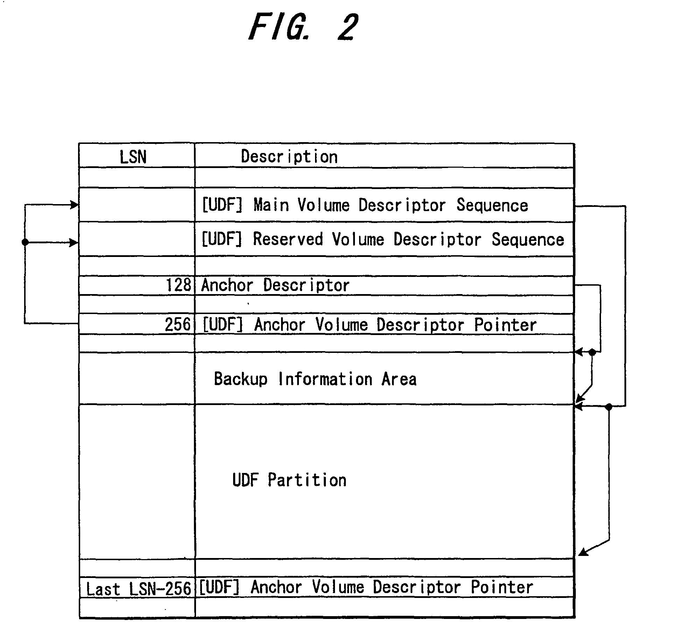

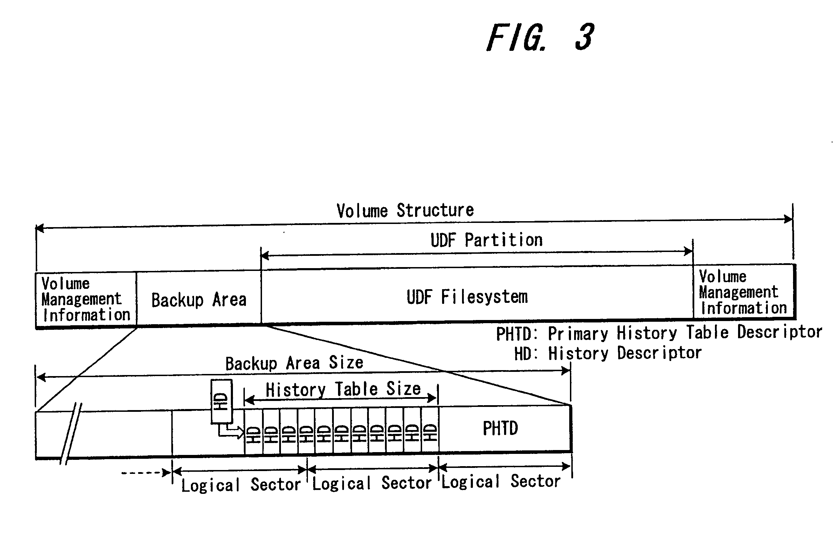

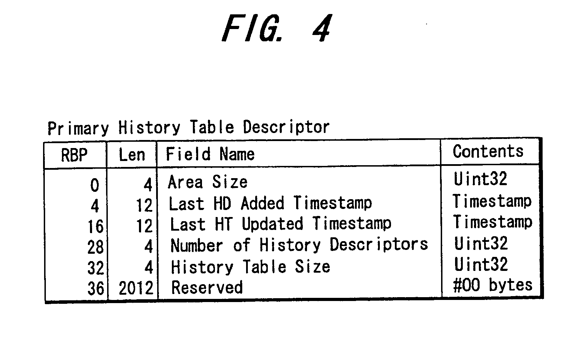

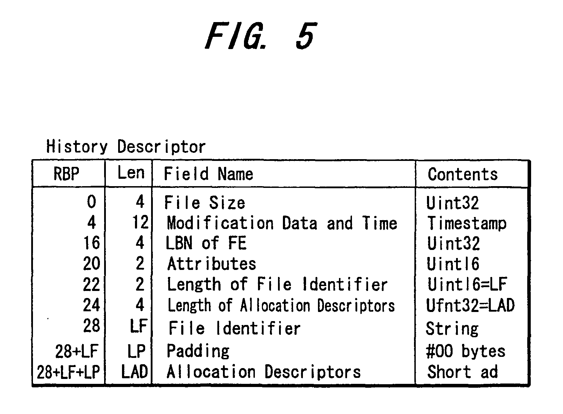

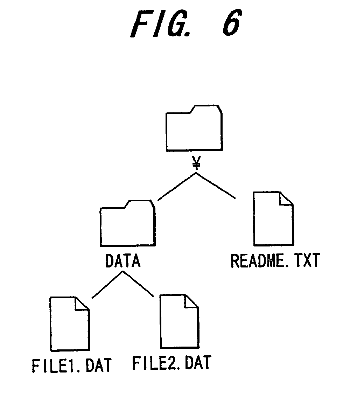

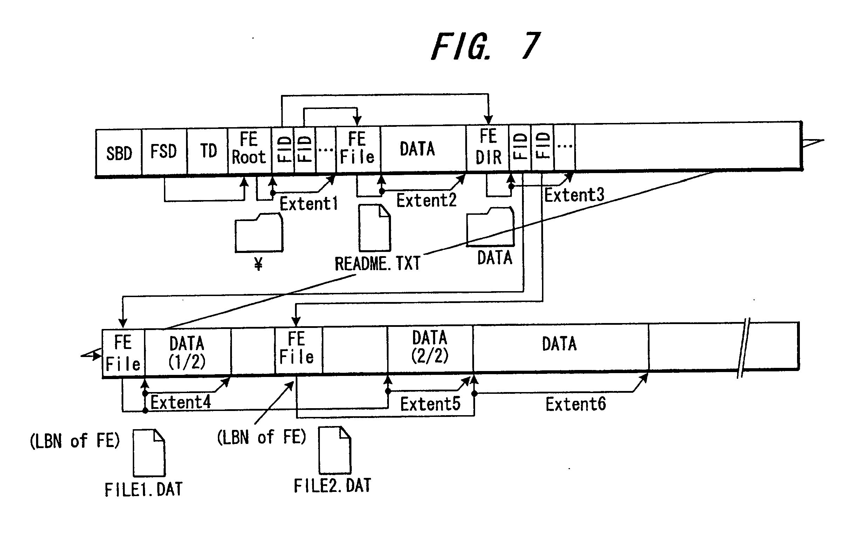

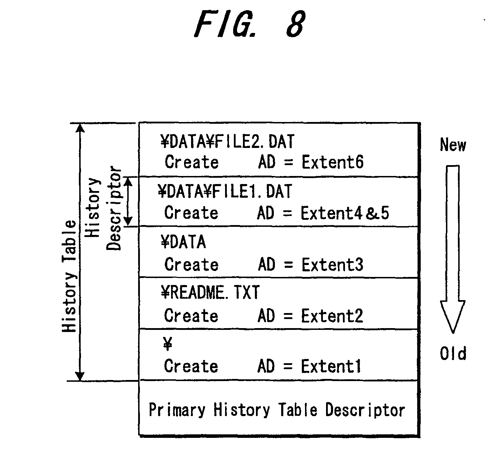

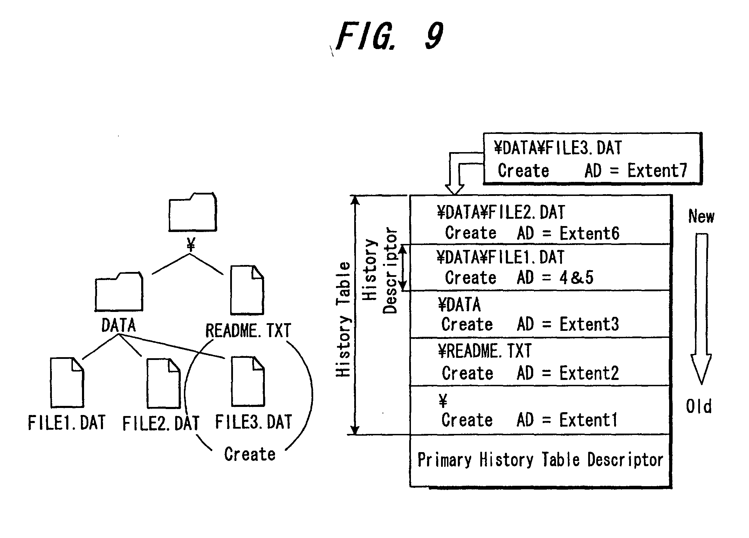

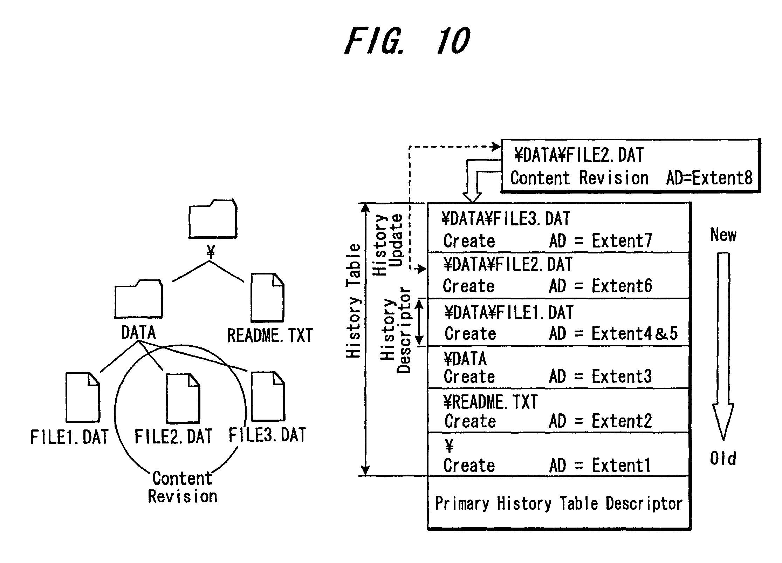

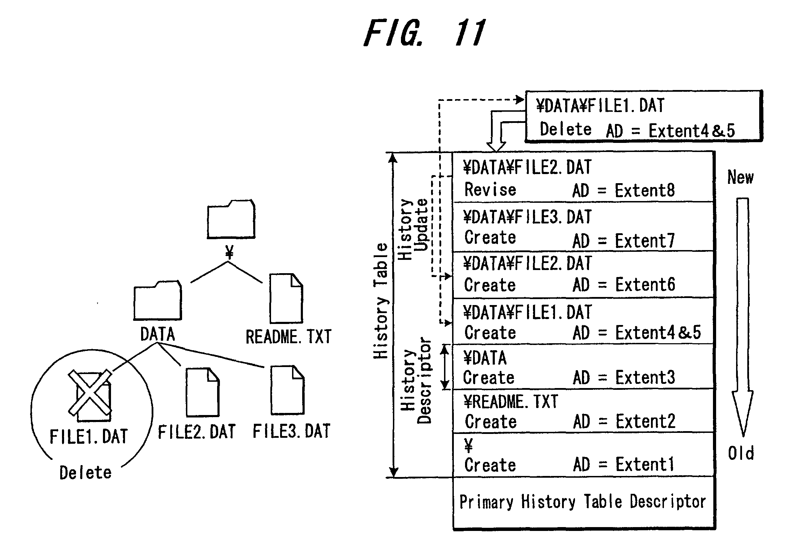

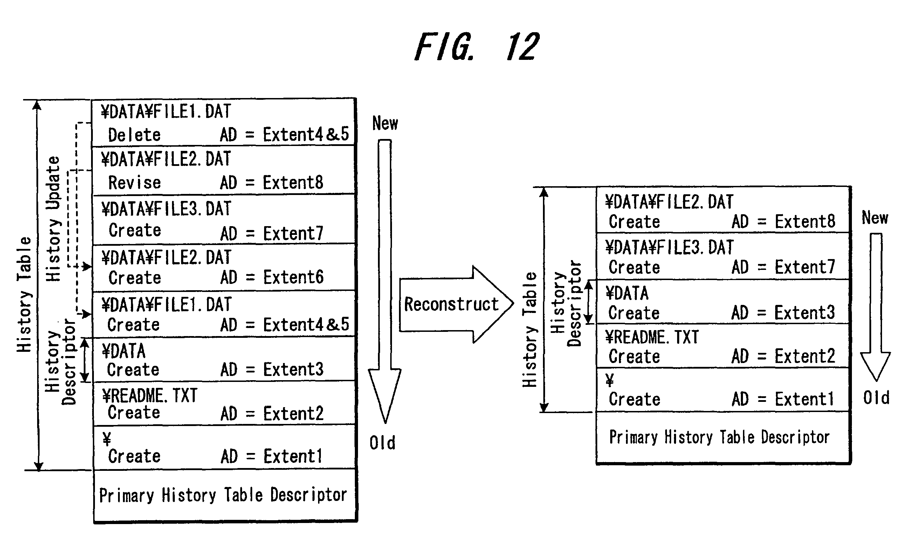

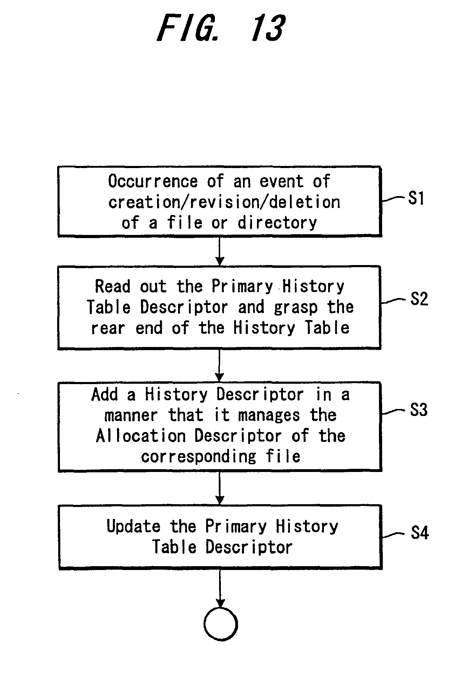

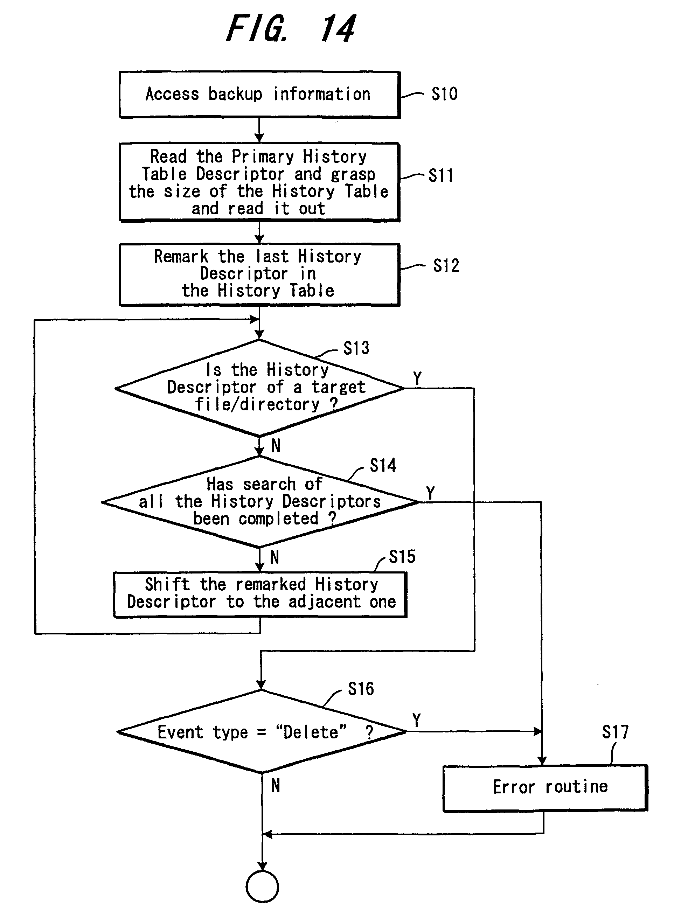

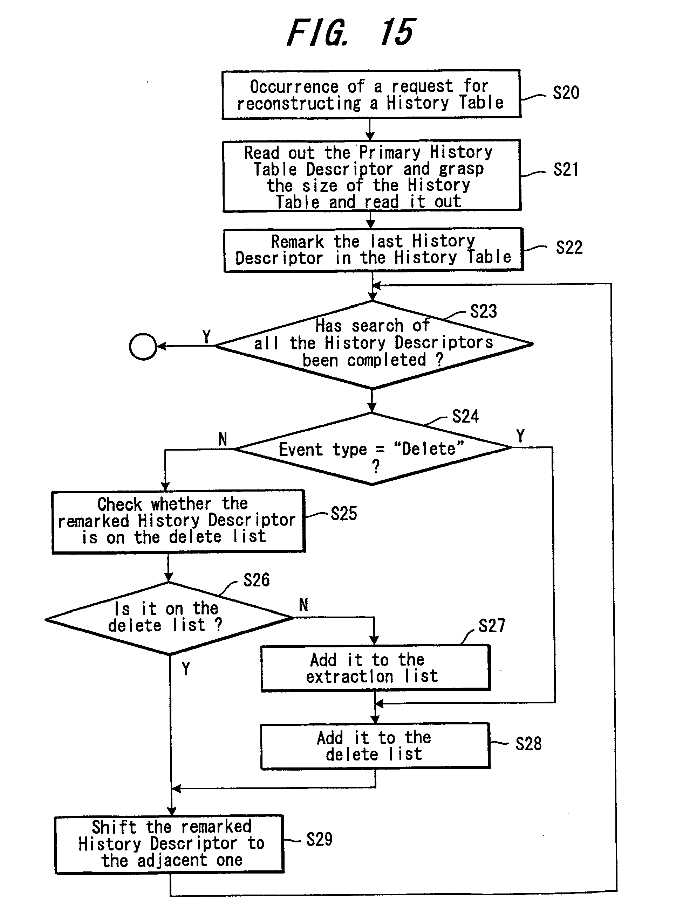

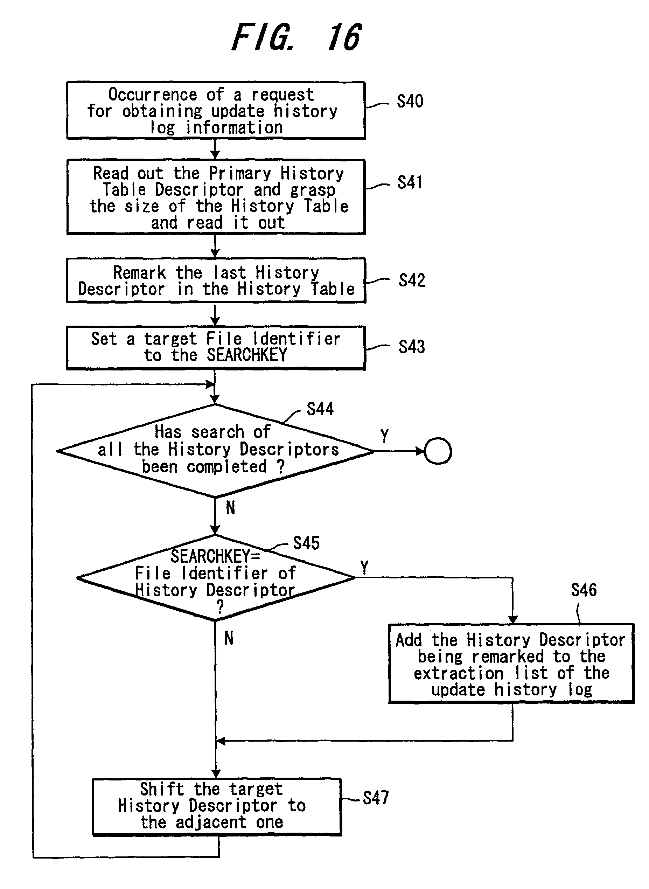

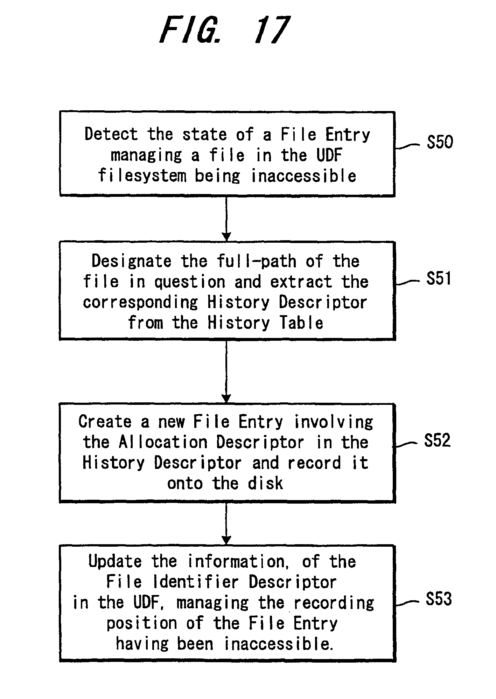

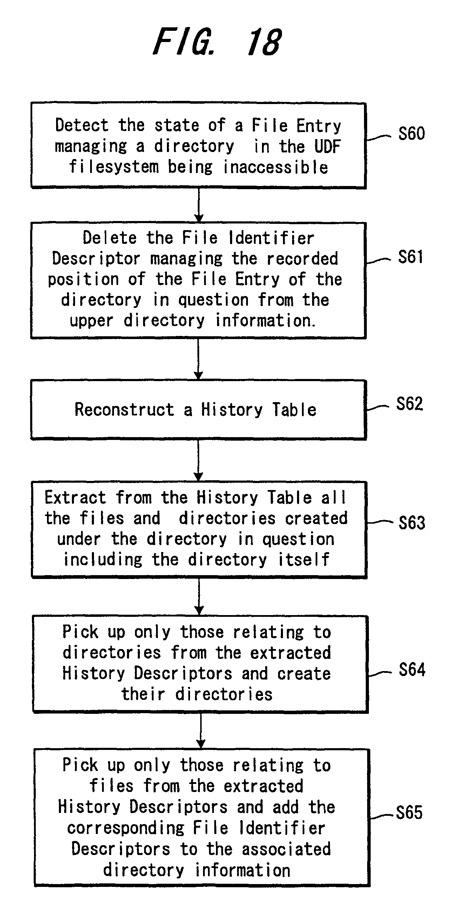

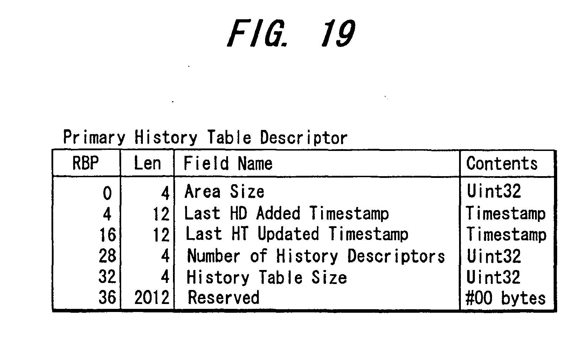

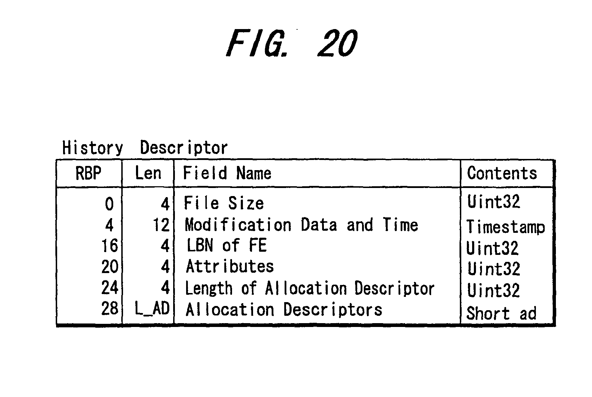

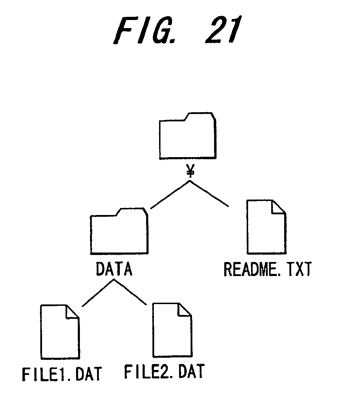

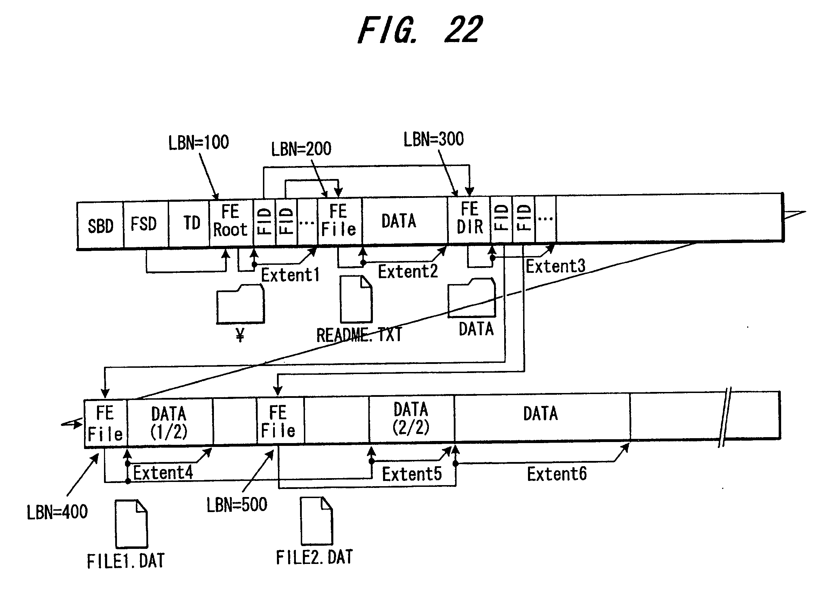

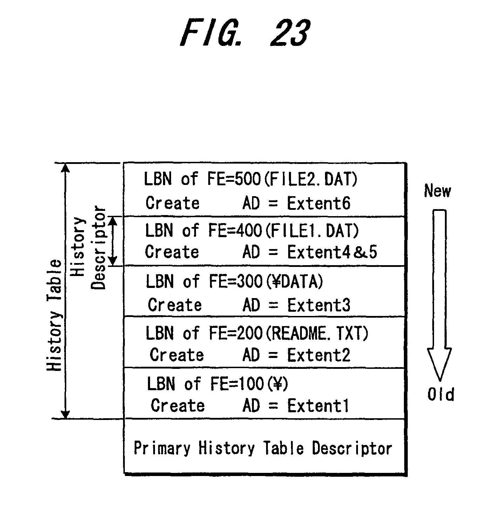

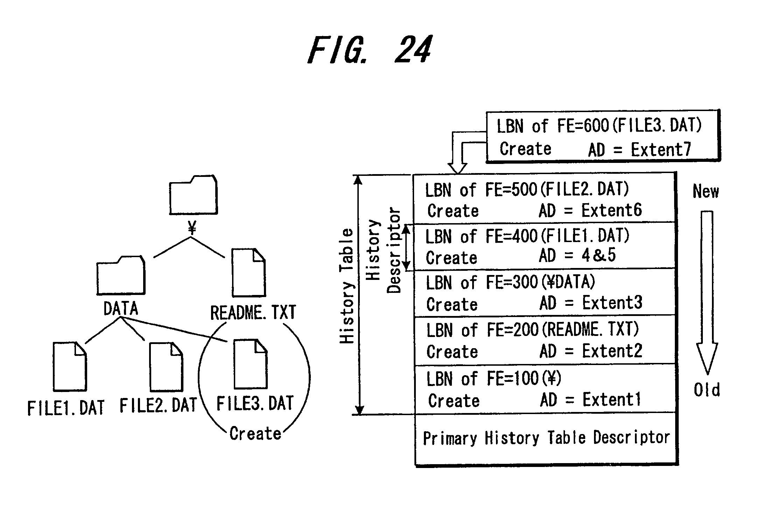

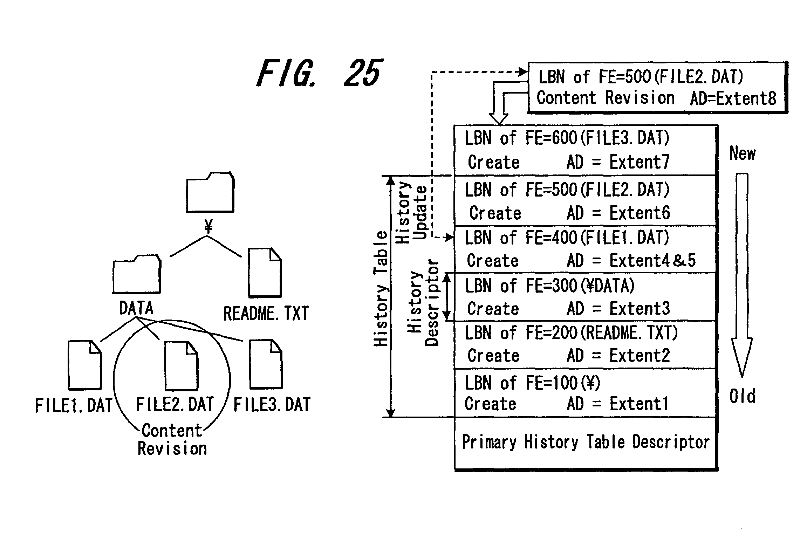

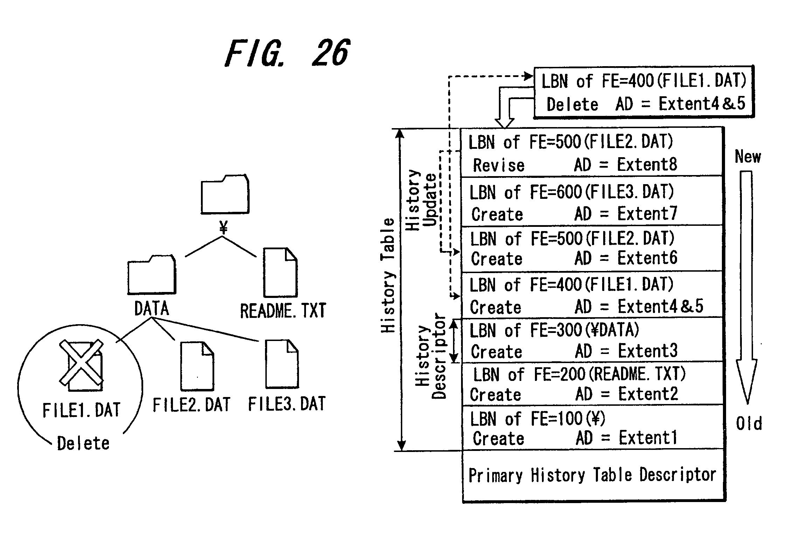

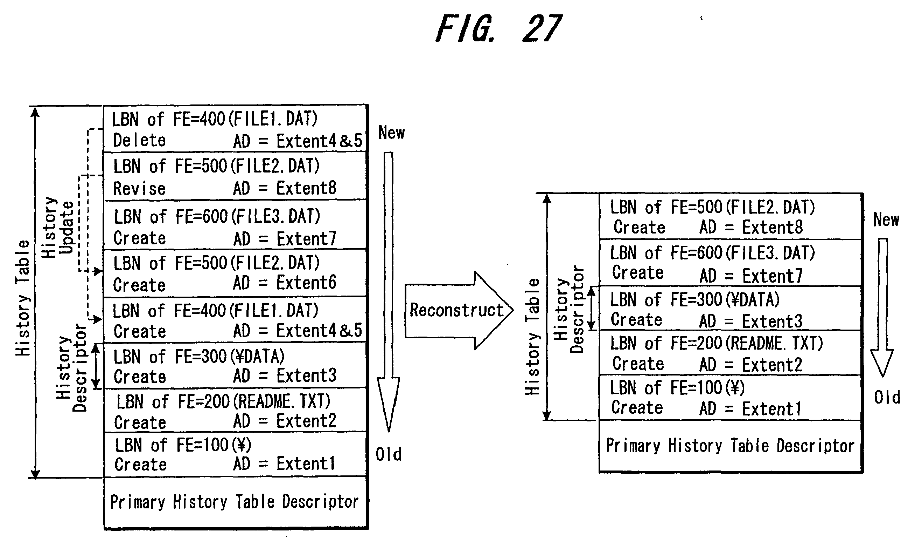

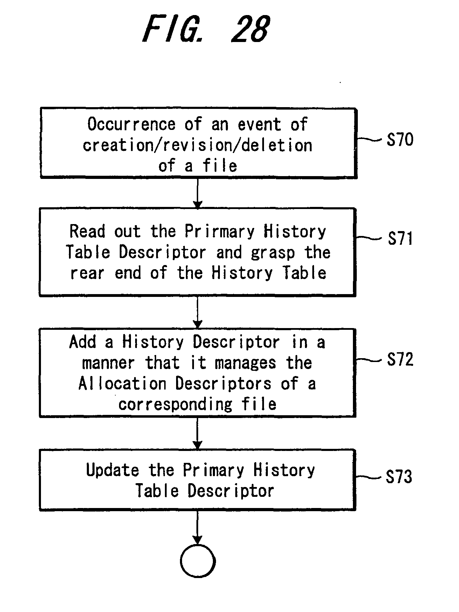

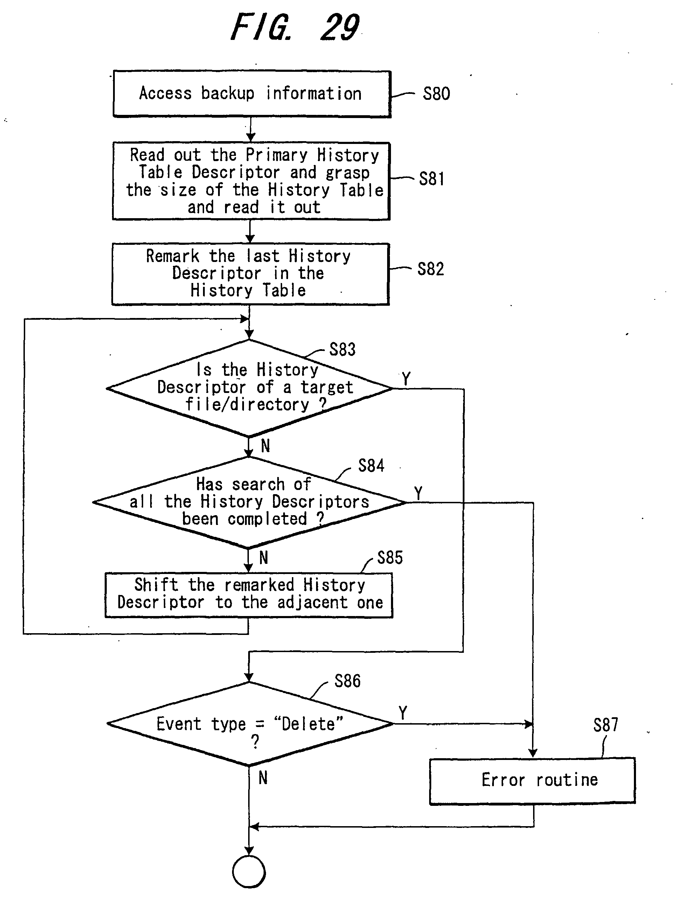

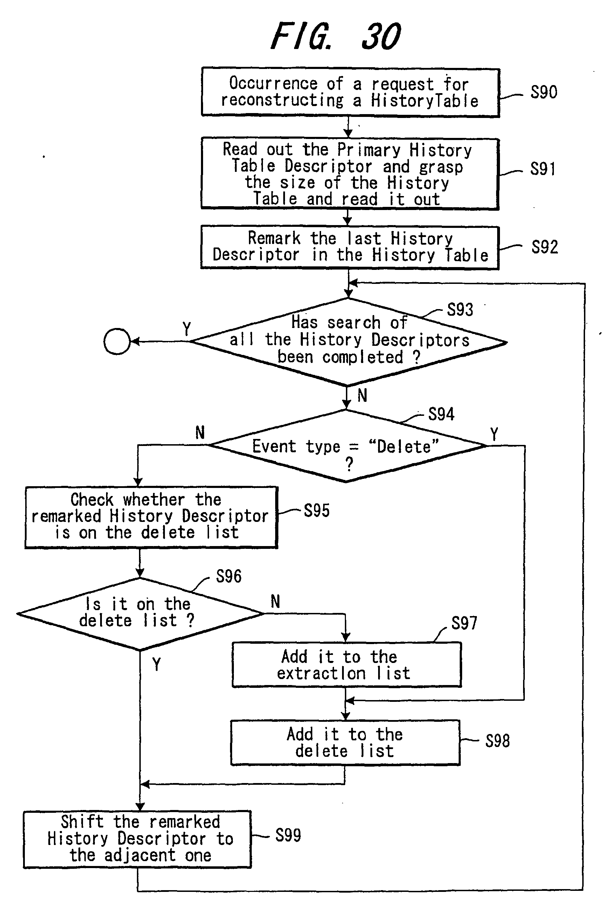

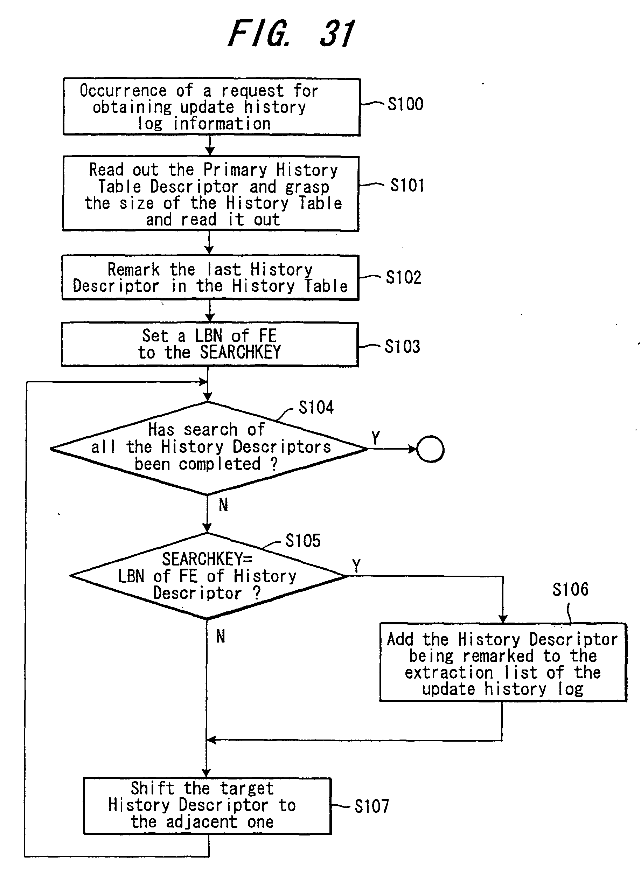

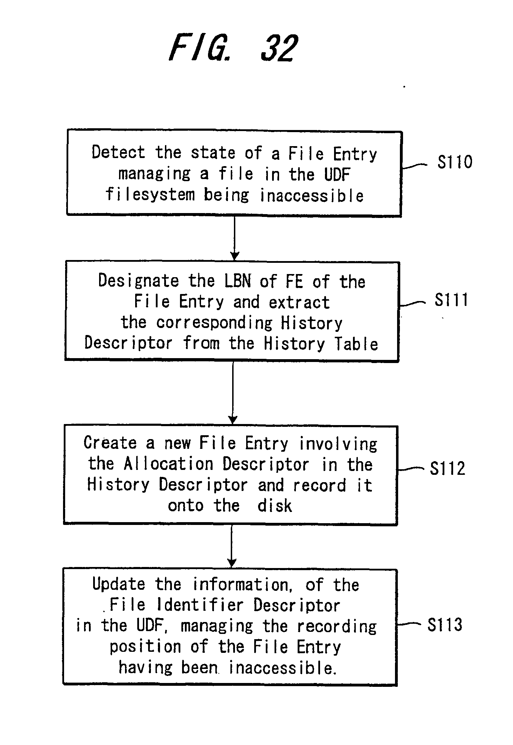

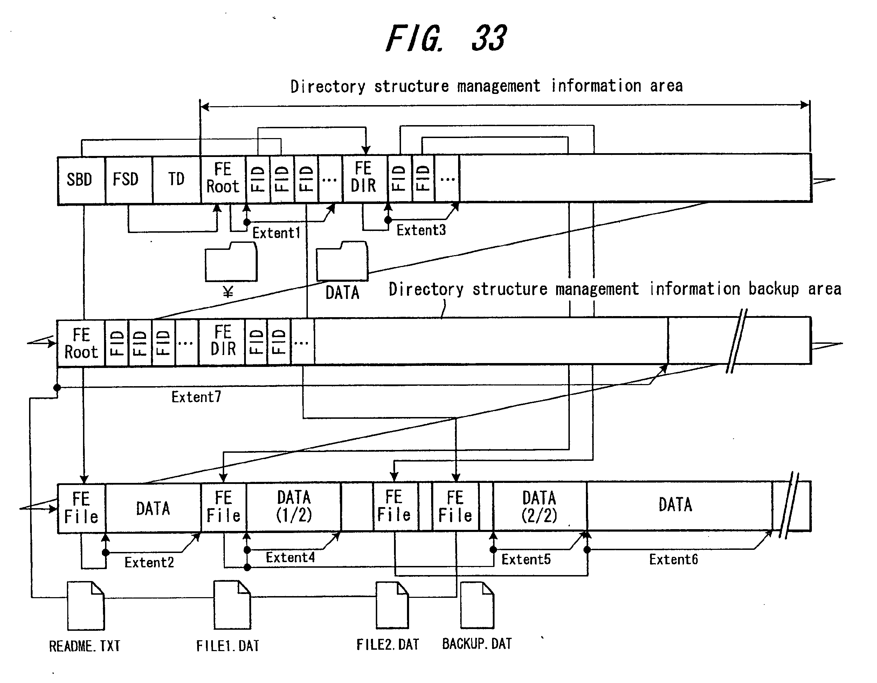

Fig.1 is an illustration showing a block diagram in the embodiment of a disk management method of the present invention; Fig.2 is an illustrative diagram showing the relationship between a UDF partition and a backup area in the embodiment of a disk management method of the present invention; Fig.3 is an illustrative diagram showing the contents in the backup area in the embodiment of a disk management method of the present invention; Fig.4 is an illustrative diagram showing a Primary History Table Descriptor in the first embodiment of a disk management method of the present invention; Fig.5 is an illustrative diagram showing a History Descriptor in the first embodiment of a disk management method of the present invention; Fig.6 is an illustrative diagram showing an example of a directory hierarchy in the first embodiment of a disk management method of the present invention; Fig.7 is an illustrative diagram showing an example of the arrangement on the disk of the UDF management information and data corresponding to Fig.6 in the first embodiment of a disk management method of the present invention; Fig. 8 is an illustrative diagram showing an example of a History Table corresponding to Fig.7 in the first embodiment of a disk management method of the present invention; Fig.9 is an illustrative diagram showing the way in which the History Table is updated when a file is added in the first embodiment of a disk management method of the present invention; Fig.10 is an illustrative diagram showing the way in which the History Table is updated when a file is revised in the first embodiment of a disk management method of the present invention; Fig.11 is an illustrative diagram showing the way in which the History Table is updated when a file is deleted in the first embodiment of a disk management method of the present invention; Fig.12 is an illustrative diagram showing the way of reconstructing a History Table in the first embodiment of diskmanagement method of the present invention; Fig.13 is a flowchart showing the procedures when an event such as creation, revision or deletion of a file or directory has occurred in the first embodiment of a disk management method of the present invention; Fig.14 is a flowchart showing the procedures when the History Table as the backup information in the first embodiment of a disk management method of the present invention is accessed; Fig.15 is a flowchart showing the procedures of reconstructing a History Table as the backup information in the first embodiment of a disk management method of the present invention; Fig.16 is a flowchart showing the procedures for grasping the update history log as to a particular file or directory from the History Table as the backup information in the embodiment of a disk management method of the present invention; Fig.17 is a flowchart showing the procedures of restoring a File Entry that manages a file in a UDF filesystem using the History Table as the backup information in the first embodiment of a disk management method of the present invention; Fig.18 is a flowchart showing the procedures of restoring a File Entry that manages a directory in a UDF filesystem using the History Table as the backup information in the first embodiment of a disk management method of the present invention; Fig. 19 is an illustrative diagram showing a Primary History Table Descriptor in the second embodiment of a disk management method of the present invention; Fig.20 is an illustrative diagram showing a History Descriptor in the second embodiment of a disk management method of the present invention; Fig.21 is an illustrative diagram showing an example of a directory hierarchy in the second embodiment of a disk management method of the present invention; Fig.22 is an illustrative diagram showing an example of the arrangement on the disk of the UDF management information and data corresponding to Fig.6 in the second embodiment of a disk management method of the present invention; Fig.23 is an illustrative diagram showing an example of a History Table corresponding to Fig. 7 in the second embodiment of a disk management method of the present invention; Fig. 24 is an illustrative diagram showing the way in which the History Table is updated when a file is added in the second embodiment of a disk management method of the present invention; Fig. 25 is an illustrative diagram showing the way in which the History Table is updated when a file is revised in the second embodiment of a disk management method of the present invention; Fig.26 is an illustrative diagram showing the way in which the History Table is updated when a file is deleted in the second embodiment of a disk management method of the present invention; Fig.27 is an illustrative diagram showing the way of reconstructing a History Table in the second embodiment of disk management method of the present invention; Fig.28 is a flowchart showing the procedures when an event such as creation, revision or deletion of a file or directory has occurred in the second embodiment of a disk management method of the present invention; Fig. 29 is a flowchart showing the procedures when the History Table as backup information in the second embodiment of a disk management method of the present invention is accessed; Fig. 30 is a flowchart showing the procedures of reconstructing a History Table as backup information in the second embodiment of a disk management method of the present invention; Fig. 31 is a flowchart showing the procedures for grasping the update history log as to a particular file or directory from the History Table as backup information in the second embodiment of a disk management method of the present invention; Fig. 32 is a flowchart showing the procedures of restoring a File Entry that manages a file or directory in a UDF filesystem using the History Table as backup information in the second embodiment of a disk management method of the present invention; Fig.33 is an illustrative view showing the way in which UDF management information that manages the directory structure in the second embodiment of a disk management method of the present invention is replicated; Fig.34 is an illustrative diagram showing the prior art condition of the area in which the management information of a logical filesystem and the data are recorded and Fig.35 is an illustrative diagram showing the condition of a logical filesystem in the prior art in which the area for the management information of the filesystem to be recorded and that for the data are separated.

### Best Mode for Carrying Out the Invention

Referring to Figs.1 through 33, the embodiments of disk management methods of the present invention will be described in detail. In the embodiments, the disk devices are assumed to be hand-held video cameras and video decks using a disk for AV recording and reproduction, external recording devices connected to a PC and others. The disk media are preferably of a removable type but may be of a mounted type such as a hard disk. For description convenience, the logical filesystem used for the disk is assumed to be based on the UDF (Universal Disk Format) as the standard of the OSTA (Optical Storage Technology Association), but other generalized logical filesystems can be used.

Fig.1 shows the configuration of a typical disk device. A data input/output portion 1 inputs video signals from a camera etc., and outputs data to be reproduced to a monitor or the like. A data processor 2 is a processing portion which performs signal processings such as encoding and decoding MPEG codes. The processed data is stored in a memory 3. When data is recorded, a disk controller 5 controls a disk 6 so that data can be recorded at a target position on the disk. When the data is reproduced, the controller controls disk 6 so that data is read out from a target position on the disk and stored into memory 3. Each processing portion is controlled by a system controller 4.

In the logical filesystem in this disk device, when the area for the management information of the logical filesystem and that for the data are clearly separated, it is possible to easily create a backup of the management information by replicating the management information area. However, if the area for the management information of the logical filesystem and that for the data are not clearly separated, or when the management information of the logical filesystem and the data are recorded in the same disk space, it is not easy to create a backup of the management information.

Differing from the case where the areas for the management information and data are clearly separated, it is impossible to record pieces of management information scattered on the disk into the backup area of a definite size. That is, when the management information of a directory is recorded with addresses on the disk at which pieces of the management information on files and directories contained in the directory are recorded and when this management information is backed up in the backup area, the addresses on the disk which are linkage information between pieces of management information of the logical filesystem must be modified in accordance with the recorded positions of the management information inside the backup area.

The present invention particularly aims at avoiding inability of reading out data due to deficiency of reading the management information in a generalized logical filesystem having no replicating function of the management information on files and directories.

Since the files and directories already recorded on the disk are managed by a logical filesystem such as UDF, it is nonsense to back up the management information of the logical filesystem because too complicated operations are needed. Therefore, in the present invention, only the least sufficient information for allowing access to the files and directories will be recorded as the backup information. This least sufficient backup information is recorded into an area which is provided separately from that for managing the filesystem to be backed up.

Fig.2 shows the relationship between the backup area used in the present invention and a partition defined based on the UDF standard. In the UDF, it is determined that the Anchor Volume Descriptor Pointer should be recorded at the logical sector number 256 and the last logical sector number-256, so that an access to this information makes it possible to grasp the Volume Descriptor Sequence. A logical sector number is an address which is allotted in ascending order to the accessible space on the disk from the user system.

The Anchor Volume Descriptor Pointer manages the recorded position of the Volume Descriptor Sequence, comprised of the management information managing the entire Volume. The Volume Descriptor Sequence manages the management information relating to the partition defined in the Volume and makes it possible to obtain the positional information of the partition constituting the UDF filesystem for actually creating files and directories. In the present invention, the separate area for recording history information, referred to as the other area than the recording area of files and management information indicates an area that is secured outside the UDF partition.

The positional information of this backup information area can be grasped based on the Anchor Descriptor for the present invention recorded in the logical sector number 128, for example. It is also possible to reserve the area assuming that an area exists at a particular fixed position, without using Anchor Descriptor for grasping the area position of the backup information area. In the example in the drawing, the Reserved Volume Descriptor Sequence as the backup of the management information of the Volume is also recorded after the Main Volume Descriptor Sequence.

Fig.3 shows the arrangement in the backup area. The Volume management information at the head end in the figure corresponds to the area located before the backup information area in Fig.2. The backup area has the Primary History Table Descriptor (PHTD) and a plurality of History descriptors (HDs) recorded therein. All the HDs as a whole will be called 'History Table'. This History Table serves as the backup information(history information) for the management information of the UDF filesystem. The PHTD is recorded at the last logical sector in the backup area and HDs are added successively from the logical sector located right before the PHTD towards the head end in the backup area. Within each logical sector, History Descriptors are recorded so as to close to the rear.

For example, suppose that a History Descriptor of 52 bytes is first recorded, the History Descriptor will be recorded from the 1996th byte (sector size: 2048 bytes minus History Descriptor size: 52 bytes) in the logical sector located right before the PHTD. The reason why recording is performed in this way is that the latest History Descriptor is recorded successively from the lowest logical sector number, to provide ease of accessing the backup information.

For example, when a History Descriptor of the backup information of an arbitrary file is extracted from the History Table, because of the above recording arrangement the latest History Descriptor is arranged at the top in the memory space on the memory that stores the History Table read out from the disk, providing easy access. That is, if the target History Descriptor was added relatively new, this can be found soon. Moreover, when all the History Descriptors cannot be read out due to the usable memory limitations, this configuration is markedly effective.

In the UDF filesystem, when a file is created anew, revised or deleted or when a directory is created anew or deleted, one History Descriptor is added for each file or directory to the History Table. Since the PHTD manages the size of the History Table so that the rear end of the History Table (the frontmost part on the disk) can be known, it is possible to easily add History Descriptors. Differing from generalized filesystems such as the UDF and others, the History Descriptors (the backup information of files and directories) recorded until now will not be deleted from the History Table.

In other words, each time an event such as creation, revision or deletion of a file or directory occurs in the UDF filesystem, the History Descriptor corresponding to the event is simply added to the end of the History Table (at the frontmost part on the disk).

If the management information of the UDF filesystem has become unable to be read out, the identification information for identifying the target file or directory is used as the key so as to search the History Table from its rear end (the front end on the disk) until the corresponding History Descriptor is found. Based on the thus located History Descriptor, it is possible to grasp the positional information on the disk where the corresponding file is recorded, thus solving the problem of the data being inaccessible.

Though it is necessary to make a search in the History Table in order to locate the target History Descriptor, this is acceptable because the purpose of the present invention is for backup and access to this information is needed only in the case of emergency. In return, updating of the History Table when an event such as creation, revision or deletion of a file or directory in the UDF filesystem has occurred can be limited to the least sufficient amount of data and process, i.e., only adding one History Descriptor.

Since the History Descriptors corresponding to the events such as creation, revision and deletion of files and creation and deletion of directories in the UDF filesystem have been recorded in the History Table from when it began to be created, the History Table not simply serves as the backup of the management information of the UDF filesystem but can also be used as the update history log of the filesystem management information.

Since History Descriptors are merely added to the History Table, it is possible that the History Table might become huge in the course of usage or that the residual blank area for backup may run out. To deal with this, it is possible to reconstruct a History Table by deleting from the History Table all the History Descriptors or old update history information, other than those corresponding to the files and directories defined in the UDF filesystem.

Description will be made on the first embodiment in which filenames are used as the identification information for identifying files and directories to be backed up by the management with History Descriptors. Here, Fig. 4 shows the contents of the Primary History Table Descriptor, which includes the descriptors that manage the information for managing the History Table and the information of the backup area.

The Area Size represents the size of the backup area with the number of bytes and is recorded in a Uint32 format. The Last HD Added Timestamp records the final time and date when the last addition of a History Descriptor to the History Table was made. This information makes it possible to grasp the time and date when a History Descriptor was added last, hence can be used to check the consistency with the management information of the UDF filesystem, for example. The Last HT Updated Timestamp records the time when the last reconstruction of the History Table was carried out. This information helps grasping from when the update history log retained in the History Table originated.

The Number of History Descriptors represents the number of the History Descriptors recorded in the History Table and is recorded in Uint32 format. The History Table Size represents the size of the History Table in bytes and is recorded in Uint32 format. The total size of all the History descriptors in the History Table is represented by the number of bytes. Usually, addition of a History Descriptor onto the disk is performed by logical sector units. Suppose that one logical sector has a size of 2KB, the quotient obtained when this History Table Size is divided by 2KB presents the number of logical sectors from the position one sector (the size of the PHTD) before the last logical sector, in the backup area to be accessed.

The remainder is the amount of data already recorded in the logical sector into which data should be added. That is, addition of a History Descriptor is made by once reading out the target logical sector, adding a History Descriptor prior to the information already written and then recording the contents of the logical sector onto the disk.

In the drawing, the RBP indicates the Relative Byte Position, which is the information designating the starting position of a corresponding management item from the head end. The Len indicates the size of the management item in bytes, the Field Name represents the name of a management item, the Contents indicates in what format the management item should be written. Of the data types used in the Contents, 'Uint8' means an 8-bit integer without sign, 'Uint16' means a 16-bit integer without sign and 'Uint32' means a 32-bit integer without sign. 'String' is a data type for storing a character string and Timestamp' is a type for storing time and date information.

Fig.5 shows the contents of a History Descriptor. A History Descriptor is the backup information of the management information of a file or directory in the logical filesystem and is made up of least sufficient information for enabling access to the corresponding file or directory. The File Size indicates the file size of a file to be backed up in bytes and is recorded in Uint32 format. Specifically, the value of the Information Length that indicates the information of the file size in the corresponding File Entry of the UDF filesystem should be recorded. The Modification Date and Time indicates the time when this file is added, revised or deleted or when a directory is added or deleted, and is recorded in the Timestamp format. If the entity to be backed up is a file, the same value as the Modification Date and Time, indicating the modification date and time in the corresponding File Entry of the UDF filesystem should be written in. In the case of a directory, the same value as the Access Data and Time, indicating the creation date and time in the File Entry should be written in. When the History Descriptor indicates the deletion of a file or directory, the actual date and time of deletion should be recorded.

The LBN of FE indicates the logical block Number in the UDF partition for representing the recorded position of the File Entry of a file or directory to be backed up in the UDF filesystem and is recorded in Uint32 format. The Attributes indicates in Uint16 format the type of an event to be backed up and whether the entity to be backed up is a file or directory. 'Bit 0' indicates whether the entity to be backed up is a file or directory. If this value is 0, it means a file and if 1, it means a directory. Bits 1 and 2 are handled as a 2-bit information without sign. If the value of this 2 bit is '0', it indicates 'creation', '1' indicates 'revision' and '2' indicates 'deletion'. The Length of File Identifier indicates the length of a File Identifier as the information that identifies either a file or directory, in bytes and is recorded in the Uint16 format. The Length of Allocation Descriptors indicates the length of an Allocation Descriptors field, in bytes and is recorded in the Uint32 format. The same value as the Length of Allocation Descriptors of the File Entry of a file to be backed up in the UDF filesystem is recorded.

The File Identifier is the information that identifies either a file or director and is recorded in a string format with a length of the Length of File Identifier byte. The information for identifying a file or directory is usually a filename or directory name. Here, a File Identifier should be recorded with a path name of the file or directory.

For example, in the case where a file 'FILE1.DAT' in the DATA directory is located in the Root directory, this file is recorded as '¥DATA¥FILE1.DAT'. In this case, the aforementioned Length of File Identifier is 15 bytes. It is not necessary that a File Identifier should be a filename but any will work such as a file ID number or the like as long as it can identify a file or director. However, this does not mean that diverse types of File identifiers can exist in the same disk.

The Padding is the information which adjusts the starting RGP of the Allocation Descriptors field to 4-byte alignment and records a necessary number of ' 00h'. The number of bytes for Padding is determined by 4xip (L_FI+28+3)/4)-(L_FI+28), where ip(n) is a function to take the integer part of n and L_FI is the value designated in the field of the Length of File Identifier. The Allocation Descriptors (AD) is a management structure for managing the recording positions of data on the disk and is made up of the Extent Length in Uint32 format and the Extent Position in Uint32 format. Here, the Extent Length and the Extent Position are as a whole handled as a Short_ad format. The Extent Length indicates the length of a fragment in bytes and the Extent Position is recorded with the starting logical block number of the fragment. For a single file, the actual data of the file might be recorded separately on the disk, so that as many Allocation Descriptors as the number of the fragments of the file will be recorded.

In reality, one Allocation Descriptors is 8 bytes, the number of Allocation Descriptors can be obtained by dividing the value of the Length of Allocation Descriptors by 8. This field is written with the same content as that of the Allocation Descriptors in the File Entry in the UDF filesystem to be backed up.

Next, the actual embodiment using the thus configured management information will be described. When there are files and directories in a directory hierarchy shown in Fig.6, the arrangement of data and management information of the logical filesystem in the partition defined by the corresponding UDF filesystem is shown in Fig.7.

Recorded from the head end of the partition are the Space Bitmap Descriptor (SBD) which manages the blank area information inside the partition, the File Set Descriptor (FSD) which is the basic management information of the filesystem and has the pointer information to a File Entry (FE Root) managing the Root directory, and the Terminating Descriptor (TD) which indicates that the File Set Descriptor terminates.

Recorded further are File Entries (FEs) which manage the Root directory and the DATA directory, respectively, File Identifier Descriptors (FIDs) as pointer information to File Entries (FEs) managing the filenames and attribute information of files defined under these directories and the files or subdirectories, a File Entry (FE) which manages README.TXT defined under the Root directory and File Entries (FEs) which manage FILE1.DAT and FILE2.DAT defined under the DATA directory.

It is noted that the logical block number in which the File Entry managing the file is recorded will be recorded in the LBN of FE field in each History Descriptor. The File Entry of a file or directory manages fragments of information on the disk based on the Allocation Descriptors as Extents where the associated data is recorded therein. For example, in the example shown in Fig.7, the data corresponding to FILE1.DAT is recorded on the disk as fragments, namely constructed of Extents 4 and 5. The data corresponding to FILE2. DAT is recorded contiguously on the disk, as constructed of Extent 6.

Fig.8 shows an example of a History Table corresponding to the thus conditioned directory hierarchy. In this diagram, the Primary History Table Descriptor is arranged at the bottom, and the rear end of the History Table corresponds to the top in the diagram. This example shows the way in which the Root directory (¥), ¥README . TXT, ¥DATA directory, ¥DATA¥FILM1. DAT and ¥DATA¥FILE2.DAT were created in the order mentioned. Each frame other than one at the bottom corresponds to one History Descriptor, and all the History Descriptor constitute the History Table.

Fig.9 shows the way in which a file FILE3.DAT' was created (added) under the DATA directory from the state shown in Fig.8. When FILE3.DAT is created in the UDF filesystem, one History Descriptor corresponding to this event is added at the rear end (in the front end on the disk) of the History Table. In this case, ¥DATA¥FILE3.DAT is recorded as the File Identifier of the History Descriptor, the date and time when the file was created is filled in as the Timestamp, 0001h indicating a file and its creation is filled in as the Attribute, the file size of FILE3.DAT is filled in as the File Size, the product of the number of fragments of data corresponding to FILE3.DAT on the disk multiplied by eight is filled in as the Length of Allocation Descriptors, and the positional information as to the fragments is filled in as the Allocation Descriptors (AD). Here, FILE3.DATA is constructed of Extent 7 alone (which means that the data is recorded contiguously) .

Fig.10 shows the way in which the content of a' FILE2.DAT' under the DATA directory was revised from the state shown in Fig. 9. When the position of FILE2.DAT on the disk in the UDF filesystem is changed or when the content is revised, a History Descriptor corresponding to this event is added at the rear end (in the front end on the disk) of the History Table. In this case, '0002h' that indicates a file and its revision is recorded as the Attribute. Further, the position of FILE2. DAT on the disk is changed so that the fragment managed by the Allocation Descriptors (AD) is changed to Extent8. When the History Descriptor relating to the revision of this FILE2.DAT is added, the existing History Descriptor generated when FILE2.DAT was created in the History Table becomes old information or update history information.

Fig.11 shows the way in which FILE1.DAT' under the DATA directory was deleted from the state shown in Fig.10. When FILE1.DAT is deleted in the UDF filesystem, a corresponding History Descriptor is added at the rear end of the History Table (at the front end on the disk). In this case, '0004h' that indicates a file and its deletion is recorded as the Attribute and the positional information of the data immediately before deletion is recorded as the Allocation Descriptors (AD). Since the data is to be deleted, the recorded position right before may be adapted so as not to be written. When the History Descriptor relating to the deletion of this FILE1.DAT is added, the existing History Descriptor generated when FILE1.DAT was created in the History Table becomes old information or update history information.

Though the above description has been made when the event type is of creation, revision and deletion with reference to Figs.9 through 11, a copy, transfer or name change of a file or directory, for example, may also occur on the filesystem. The update information of these events can be basically represented by combinations of the above-described creation, revision and deletion. For example, transfer of a certain file is equivalent to the combination of creating a History Descriptor representing deletion of the file at the original position before transfer and creating a History Descriptor representing creation of the file at the destination after transfer. Similarly, the title change is equivalent to the combination of creating a History Descriptor representing deletion of the file before title change and adding a History Descriptor representing creation of the file after title change.

Fig.12 shows the way of reconstructing a History Table. History Descriptors are simply and sequentially added to the History Table each time an event such as creation, revision and deletion relating to a file or an event such as creation and deletion relating to a directory occurs in the UDF filesystem. Since the area in which History Descriptors are recorded is limited, it becomes necessary to reconstruct a History Table by deleting unnecessary information from the History Table in some situations.

In this case, checking sequentially from the History Descriptor at the last end (in the front end on the disk) of the History Table, information relating to an identical file or directory, or History Descriptors corresponding to the update history log are deleted from the History Table. HistoryDescriptorswiththeirAttributebeing 'delete' should also be deleted. In the example illustrated, '¥DATA¥FILE2.DAT CREATE' and '¥DATA¥FILE1. DAT CREATE' which correspond to the update history log and the History Descriptor '¥DATA¥FILE1.DAT DELETE' are deleted from the History Table on the left side to reconstruct a History Table on the right side. Upon this reconstruction, the Attribute of all the remaining History Descriptors is changed to 'CREATE'.

Next, the detailed process will be explained using flowcharts. Fig. 13 shows the flow of procedures when an event such as creation, revision or deletion of a file or directory has occurred in the UDF filesystem.

As Step S1, when an event of creation, revision or deletion of a file has occurred, the Primary History Table Descriptor is read out at Step S2 to grasp the rear end (the front end on the disk) of the History Table.

Specifically, it is possible to grasp the position of the rear end of the History Table from the History Table Size in the History Table. At Step S3, a History Descriptor corresponding to the file is added at the rear end of the History Table. In this History Descriptor, as shown in Fig. 5, the file name is recorded in a full path format as the File Identifier, the type of the event occurring and either a file or directory are recorded as the Attribute with the date and time of the occurrence of the event, and the Allocation Descriptors is recorded in such a manner as to manage the fragments on the disk, which are managed by the file in the UDF filesystem in which the event has occurred. At Step S4, the Last HD Added Timestamp representing the time at which the History Descriptor was added, the number of the History Descriptors and the History Table Size at the rear end (the front end on the disk) in the Primary History Table Descriptor are updated to end the process. In the above way, the process when an event relating to a file in the UDF has occurred is performed simply by adding a History Descriptor.

Differing from the case of a file, when the entity to be backed up is a directory, it is possible to manage the existence of the directory only using a History Descriptor without recording File Size, LBN of FE and Allocation Descriptors.

In description with this flowchart, every time an event such as creation, revision or deletion of a file or creation or deletion of a directory occurs in the UDF filesystem, a corresponding History Descriptor is added to the History Table. However, it is also possible to update the Primary History Table Descriptor by reading out the Primary History Table Descriptor at the time when, for example, the power is turned on or when the disk is mounted, and then adding the History Descriptors corresponding to all the events having occurred during the associated period at a time when the power is turned off or the disk is dismounted. In one word, History Descriptors may be kept on the memory, and the History Table on the disk can be updated at one time at a certain timing.

In this way, whenever an event relating to a file or directory occurs, a History Descriptor is added. To access a file or director in the UDF, the names of files and directories recorded in the directories should be grasped first by accessing File Identifier Descriptors. Then, based on the data of the File Identifier Descriptor corresponding to the file or directory to which access is wanted, the recorded position of the corresponding File Entry is grasped to make access to the File Entry.

Since File Entries manage the recorded positions of actual files and directories, the real data can be accessed based on this information. Next description will be made with reference to the flowchart shown in Fig.14 as to the means of accessing the History Table as the backup information in the case of emergency when an attempt of accessing a file or directory resulted in failure to access the File Entry that governs them.

At Step S10, a request for access to the History Table as the backup information occurs, the Primary History Table Descriptor is read out at Step S11 so as to grasp the size of the History Table, the number of the History Descriptors in the History Table and read out the History Table from the disk. Specifically, the number of the History Descriptors in the History Table can be known from the Number of History Descriptors in the History Table and the rear end (the front end on the disk) of the History Table can be known from the History Table Size. The read out History Table is expanded by each History Descriptor as a unit on the memory in the controller. At Step S12, the last (the newest) History Descriptor in the History Table is remarked.

At Step S13, it is judged whether the full path format name of a file or directory needing to be accessed corresponds to the File Identifier of the History Descriptor being remarked. If not, it is judged at Step S14 whether all the History Descriptors have been sought. If all the History Descriptors have been scanned, this means that no search-target backup information is found and an error routine is implemented at Step S17 to end the operation. When all the History Descriptors have not yet been scanned at Step S14, the History descriptor to be remarked is shifted to the adjacent one from the one being currently remarked in the History Table at Step S15 and the operation returns to Step S13 from where the same procedure is repeated.

When the name is determined to match the counterpart at Step S13, it is checked whether the Attribute representing the event type of the History Descriptor being remarked is 'delete' at Step S16. If the event type is 'delete', this indicates that the search-target backup information of a file or directory has been already deleted, an error routine is carried out at Step S17 to end the operation. In this case, however, if the information when the file or directory was deleted needs to be obtained, the extracted History Descriptor may be used without implementing the error routine. When the event type is other than 'delete' at Step S16, the History Descriptor being remarked is the backup information to be sought for, so the search operation is ended. Thus, it becomes possible to access the data of the file or directory based on the information from the Allocation Descriptors in the thus found History Descriptor.

In this way, when no access to the management information of a certain file or directory in the UDF filesystem can be obtained, it is possible to access the data by extracting the latest, associated History Descriptor from the History Table and grasping the location of the record of the data based on the extracted information. Further this information can be used to reconstruct UDF management information as the primary management information. For example, when a UDF File Entry managing a certain file cannot be read out, the File Entry can be recorded anew in the UDF partition based on the information of the History Descriptor corresponding to its backup information.

For the information as to the File Entry, the time of creation may be set with the time at which the File Entry is created anew, the attribute information may be set with standard one. Hence this will not completely agree with the state before the occurrence of the trouble, but it is possible to perfectly restore the information as to the recorded position of the data, which is the least sufficient information for allowing access to the data. When the recorded position of the restored UDF File Entry differs from that of the original File Entry which caused the problem, the pointer information in the File Identifier Descriptor of the UDF management information managing the recorded position of the File Entry should be updated into the recorded position of the File Entry created anew.

Referring next to the flowchart shown in Fig.15, the flow of operations when a request for reconstruction of the History Table has occurred will be explained.

When a request for reconstruction of the History Table has occurred at Step S20 , the Primary History Table Descriptor is read out at Step S21 so as to grasp the size of the History Table and the number of the History Descriptors in the History Table, and read out the History Table from the disk. Specifically, the number of the History Descriptors in the History Table can be known from the Number of History Descriptor in the History Table and the rear end position of the History Table can be known from the History Table Size. The read out History Table is expanded by each History Descriptor as a unit on the memory in the controller.

At Step S22, the last History Descriptor in the History Table is remarked. At Step S23, it is judged whether all the History Descriptors in the History Table have been checked. If all the History Descriptors have been processed, the operation is ended. If the process has not yet finished, it is determined at Step S24 whether the Attribute representing the event type of the History Descriptor being remarked is 'delete'. If the event type is 'delete', the History Descriptor being remarked is added to the delete list at Step S28. Specifically, the File Identifier of the History Descriptor being remarked is registered to the delete list. At Step S29, the History descriptor to be remarked is shifted to the adjacent one from the one being currently remarked in the History Table and the operation returns to Step S23 from where the same procedure is repeated.

At Step S24, when the event type is not 'delete', it is determined at Step S25 whether the History Descriptor being remarked is contained in the delete list. Specifically, this can be done by comparing the File Identifier of the History Descriptor being remarked with the names in the delete list. At Step S26, it is judged as to whether the file is contained in the delete list. If it is, the operation goes to Step S29, where the History descriptor to be remarked is shifted to the adjacent one from the one being currently remarked in the History Table and the operation returns to Step S23 from where the same procedure is repeated.

When it is determined at Step S26 that the file is not contained in the delete list, the History Descriptor is added to the extraction list at Step S27. Specifically, the History Descriptor being remarked is directly copied into the extraction list. At Step S28, the History Descriptor being remarked is added to the delete list and then at Step S 29, the History descriptor to be remarked is shifted to the adjacent one from the one being currently remarked in the History Table and the operation returns to Step S23 from where the same procedure is repeated.

By these procedures, redundant History Descriptors indicating the same file or directory in the History Table are deleted so that unnecessary pieces of information existing as the update history log can be deleted. Specifically, the History Descriptors remaining the extraction list when the procedures are completed present the wanted information.

Referring next to the flowchart shown in Fig.16, the flow of operations when a request for obtaining the update history log of a certain file or directory from the History Table has occurred will be explained.

When a request for obtaining the update history log of a certain file or directory from the History Table has occurred at Step S40, the Primary History Table Descriptor is read out at Step S41 so as to grasp the size of the History Table and the number of the History Descriptors in the History Table, and read out the History Table from the disk. Specifically, the number of the History Descriptors in the History Table can be known from the Number of History Descriptor in the History Table and the rear end position of the History Table can be known from the History Table Size. The read out History Table is expanded by each History Descriptor as a unit on the memory in the controller.

At Step S42, the last History Descriptor in the History Table is remarked. At Step S43, as a variable 'SEARCHKEY' representing the search target the File Identifier to be sought is set. At Step S44, it is judged whether all the History Descriptors in the History Table have been checked. If all the History Descriptors have been processed, the operation is ended. If the process has not yet finished, it is determined at Step S45 whether the File Identifier in the History

Descriptor being remarked agrees with the target file or directory to be sought. Specifically, this can be done by comparing the SEARCHKEY with the File Identifier in the History Descriptor being remarked. If not, the History descriptor to be remarked is shifted to the adjacent one from the one being currently remarked in the History Table at Step S47, and the operation returns to Step S44 from where the same procedure is repeated.

When the File Identifier of the History Descriptor being remarked agrees with the file or director to be sought at Step S45, the History Descriptor currently remarked is assumed to be the update history log of the target file or directory of which update history log is wanted and is picked up for the extraction list at Step S46. At Step S47, the History Descriptor to be remarked is shifted to the adjacent one from the one being currently remarked in the History Table, and the operation returns to Step S44 from where the same procedure is repeated.

At Step S47, the History Descriptor to be remarked is shifted to the adjacent one from the one being currently remarked in the History Table, and the operation returns to Step S44 from where the same procedure is repeated.

By these procedures, it is possible to simply extract all the History Descriptors relating to a file or directory of which update history log is wanted to be obtained from the History Table. Specifically, the History Descriptors remaining on the extraction list when the procedures are completed present the requested information.

In the above-described History Table, when the file or directory to be accessed is known beforehand, the process can be achieved by only searching for the corresponding History Descriptors contained in the History Table. There is a possibility that the management information of the filesystem to be backed up cannot be read out at all from the disk and hence it becomes impossible to know what kinds of files are recorded or in what directory structure the filesystem is configured. If such a situation occurs, the History Table should be reconstructed so that the remained History Descriptors can be referred to, whereby it becomes possible to grasp the structure of the directory hierarchy held in the backup information and the backup information can be used to access a file or directory or restore the management information.

Referring next to the flowchart shown in Fig.17, the procedures to restore the management information based on the backup information when a File Entry managing a file or directory can not be accessed in the UDF filesystem will be explained. When the state of a File Entry managing a file or directory in the UDF filesystem being inaccessible is detected at Step S50, by, for example, physical failure of reading out the File Entry, or due to a wrong checksum value or wrong CRC information recorded in the header information of the File Entry even if the File Entry can be read, the filename indicating the file or directory in question should be designated in full-path representation at Step S51 so as to extract the corresponding History Descriptor as the backup information from the History Table. The specific method of extraction is that already described.

At Step S52, the File Entry is regenerated from the information of the extracted History Descriptor. For the purpose, the content of the Allocation Descriptors contained in the History Descriptor is copied into this File Entry. The Allocation Descriptors holds the information as to the recorded position of the data corresponding to the file. Since the positional information for reading out the data can be known if this information exists, it becomes possible to read out the data. The regenerated File Entry is recorded onto the disk.

At Step S53, the ICB field of the File Identifier Descriptor of the UDF managing the recorded position of the File Entry which could not be accessed is updated so as to manage the recorded position of the File Entry recorded anew. When the regenerated File Entry was recorded at the same position as the File Entry which could not be read out, the above update does not need to be done.

Referring next to the flowchart shown in Fig.18, the procedures to restore the management information based on the backup information when a File Entry managing a directory can not be accessed in the UDF filesystem will be described. When the state of a File Entry managing a directory in the UDF filesystem being inaccessible is detected at Step S60, the File Identifier Descriptor managing the position where the File Entry of the directory in question is recorded is erased from the directory information of the upper directory.

At Step S62, a History Table is reconstructed by removing unnecessary History Descriptors from the History Table. Specific procedures are those described above. At Step S63, the directory name indicating the directory in question should be designated in full-path representation so as to extract all the History Descriptors corresponding to the files and directories created under the directory including the corresponding backup information, from the History Table.

At Step S64, among the information from the History Descriptors extracted at Step S63, only those relating to directories are picked up with reference to the Attribute information. All the directories specified by the thus picked up History Descriptors relating to directories are created. By these procedures, the directory structure before the occurrence of the problem can be restored.

At Step S65, only those relating to files are picked up with reference to the Attribute information of the History Descriptors extracted at Step S63. Based on the analysis of the File Identifiers of the thus picked up History Descriptors relating to files, the File Identifier Descriptors are added to the directory information of the directories in which the files should be recorded. During this process, the 'LBN of FE' data managed by the History Descriptor is recorded into the ICB in the File Identifier Descriptor managing the recorded position of the File Entry of the corresponding file.

Since, differing from the restoration of File Entries of files, the File Entries of files recorded on the disk have not any problem at all, it becomes possible to access a file by correctly setting the pointer information from the File Identifier Descriptor. In this way, the LBN of FE is used to restore the pointer information to the File Entry of a file. Recorded to the File Identifier of the File Identifier Descriptor is the File Identifier of the History Describer with its path information removed. By effecting this process on the History Descriptors corresponding to all the files, it is possible to restore the management information of the file structure as well as directory structure. Since the management information which has not been referred to from any management information will remain as garbage on the desk, the unnecessary management information may be detected as a post-process so as to update the blank area information, to thereby release those areas as an empty space.

Description will be made on the second embodiment in which information of the recorded position of the management information on the recording medium is used as identification information for identifying files and directories to be backed up by the management of History Descriptors. Here, Fig.19 shows the contents of the Primary History Table Descriptor, which includes the descriptors that manage the information for managing the History Table and the information of the backup area.

The Area Size represents the size of the backup area with the number of bytes and is recorded in a Uint32 format. The Last HD Added Timestamp records the final time and date when the last addition of a History Descriptor to the History Table was made. This information makes it possible to grasp the time and date when a History Descriptor was added last, hence can be used to check the consistency with the management information of the UDF filesystem, for example. The Last HT Updated Timestamp records the time when the last reconstruction of the History Table was carried out. This information helps grasping from when the update history log retained in the History Table originated.

The Number of History Descriptors represents the number of the History Descriptors recorded in the History Table and is recorded in Uint32 format. The History Table Size represents the size of the History Table in bytes and is recorded in Uint32 format. The total size of all the History descriptors in the History Table is represented by the number of bytes. Usually, addition of a History Descriptor onto the disk is performed by logical sector units. Suppose that one logical sector has a size of 2KB, the quotient obtained when this History Table Size is divided by 2KB presents the number of logical sectors from the position one sector (the size of the PHTD) before the last logical sector, in the backup area to be accessed.

The remainder is the amount of data already recorded in the logical sector into which data should be added. That is, addition of a History Descriptor is made by once reading out the target logical sector, adding a History Descriptor prior to the information already written and then recording the contents of the logical sector onto the disk.

In the drawing, the RBP indicates the Relative Byte Position, which is the information designating the starting position of a corresponding management item from the head end. The Len indicates the size of the management item in bytes, the Field Name represents the name of a management item, the Contents indicates in what format the management item should be written. Of the data types used in the Contents, 'Uint8' means an 8-bit integer without sign, 'Uint16' means a 16-bit integer without sign and 'Uint32' means a 32-bit integer without sign. 'String' is a data type for storing a character string and Timestamp' is a type for storing time and date information.

Fig.20 shows the contents of a History Descriptor. A History Descriptor is the backup information of the management information of a file or directory in the logical filesystem and is made up of least sufficient information for enabling access to the corresponding file or directory. The File Size vindicates the file size of a file to be backed up in bytes and is recorded in Uint32 format. Specifically, the value of the Information Length that indicates the information of the file size in the corresponding File Entry of the UDF filesystemshouldberecorded. The Modification Date and Time indicates the time when this file or directory is added, revised or deleted, and is recorded in the Timestamp format. If the entity to be backed up is a file, the same value as the Modification Date and Time, indicating the modification date and time in the corresponding File Entry of the UDF filesystem should be written in. In the case of a directory, the same value as the Access Data and Time, indicating the creation date and time in the File Entry should be written in. When the History Descriptor indicates the deletion of a file or directory, the actual date and time of deletion should be recorded.

The LBN of FE indicates the logical block Number in the UDF partition for representing the recorded position of the File Entry of a file or directory to be backed up in the UDF filesystem and is recorded in Uint32 format. The Attributes indicates in Uint16 format the type of an event to be backed up and whether the entity to be backed up is a file or directory. 'Bit 0' indicates whether the entity to be backed up is a file or directory. If this value is 0, it means a file and if 1, it means a directory. Bits 1 and 2 are handled as a 2-bit information without sign. If the value of this 2 bit is '0', it indicates 'creation', '1' indicates 'revision' and '2' indicates 'deletion'.

The Length of Allocation Descriptors indicates the length of an Allocation Descriptors field, in bytes and is recorded in the Uint32 format. The same value as the Length of Allocation Descriptors of the File Entry of a file or directory to be backed up in the UDF filesystem is recorded. The Allocation Descriptors (AD) is a management structure for managing the recording positions of data on the disk and is made up of the Extent Length in Uint32 format and the Extent Position in Uint32 format. Here, the Extent Length and the Extent Position are as a whole handled as a Short_ad format. The Extent Length indicates the length of a fragment in bytes and the Extent Position is recorded with the starting logical block number of the fragment. For a single file, the actual data of the file might be recorded separately on the disk, so that as many Allocation Descriptors as the number of the fragments of the file will be recorded.

In reality, one Allocation Descriptors is 8 bytes, the number of Allocation Descriptors can be obtained by dividing the value of the Length of Allocation Descriptors by 8. This field is written with the same content as that of the Allocation Descriptors in the File Entry in the UDF filesystem to be backed up.

Next, the actual embodiment using the thus configured management information will be described. When there are files and directories in a directory hierarchy shown in Fig. 21, the arrangement of data and management information of the logical filesystem in the partition defined by the corresponding UDF filesystem is shown in Fig.22.

Recorded from the head end of the partition are the Space Bitmap Descriptor (SBD) which manages the blank area information inside the partition, the File Set Descriptor (FSD) which is the basic management information of the filesystem and has the pointer information to a File Entry (FE Root) managing the Root directory, and the Terminating Descriptor (TD) which indicates that the File Set Descriptor terminates.

Recorded further are File Entries (FEs) which manage the Root directory and the DATA directory, respectively, File Identifier Descriptors (FIDs) as pointer information to File Entries (FEs) managing the filenames and attribute information of files defined under these directories and the files or subdirectories, a File Entry (FE) which manages README.TXT defined under the Root directory and File Entries (FEs) which manage FILE1.DAT and FILE2.DAT defined under the DATA directory.

It is noted that the logical block number in which the File Entry managing the file or directory is recorded will be recorded in the LBN of FE field in each History Descriptor. In the illustrated example, File Entries (FEs) of the Root directory, README.TXT, DATA directory, FILE1.DAT and FILE2.DAT are recorded at LBNs (logical block numbers) of 100, 200, 300, 400 and 500, respectively.

The File Entry of a file or directory manages fragments of information on the disk based on the Allocation Descriptors as Extents where the associated data is recorded therein. For example, in the example shown in Fig.22, the data corresponding to FILE1.DAT is recorded on the disk as fragments, namely constructed of Extents 4 and 5. The data corresponding to FILE2.DAT is recorded contiguously on the disk, as constructed of Extent 6.

Fig. 23 shows an example of a History Table corresponding to the thus conditioned directory hierarchy. In this diagram, the Primary History Table Descriptor is arranged at the bottom, and the rear end of the History Table corresponds to the top in the diagram. This example shows the way in which the Root directory (¥), README.TXT, ¥DATA directory, FILE1.DAT and FILE2.DAT were created in the order mentioned. Each frame other than one at the bottom corresponds to one History Descriptor, and all the History Descriptor constitute the History Table.

Fig.24 shows the way in which a file 'FILE3.DAT' was created (added) under the DATA directory from the state shown in Fig.23. When FILE3.DAT is created in the UDF filesystem, one History Descriptor corresponding to this event is added at the rear end (in the front end on the disk) of the History Table. In this case, the information of the position of the File Entry managing FILE3.DAT recorded on the disk, is recorded in the LBN of FE of the History Descriptor, the date and time when the file was created is filled in as the Timestamp, 00001h indicating a f ile and its creation is filled in as the Attribute , the file size of FILE3.DAT is filled in as the File Size, the product of the number of fragments of data corresponding to FILE3.DAT on the disk multiplied by eight is filled in as the Length of Allocation Descriptors, and the positional information as to the fragments is filled in as the Allocation Descriptors (AD). Here, FILE3.DATA is constructed of Extent 7 alone (which means that the data is recorded contiguously).

Fig. 25 shows the way in which the content of a 'FILE2.DAT' under the DATA directory was revised from the state shown in Fig. 24. When the position of FILE2.DAT on the disk in the UDF filesystem is changed or when the content is revised, a History Descriptor corresponding to this event is added at the rear end (in the front end on the disk) of the History Table. In this case, 0002h' that indicates a file and its revision is recorded as the Attribute. Further, the position of FILE2.DAT on the disk is changed so that the fragment managed by the Allocation Descriptors (AD) is changed to Extent8. When the History Descriptor relating to the revision of this FILE2. DAT is added, the existing History Descriptor generated when FILE2.DAT was created in the History Table becomes old information or update history information.

Fig.26 shows the way in which 'FILE1.DAT' under the DATA directory was deleted from the state shown in Fig. 25. When FILE1.DAT is deleted in the UDF filesystem, a corresponding History Descriptor is added at the rear end of the History Table (at the front end on the disk). In this case, '0004h' that indicates a file and its deletion is recorded as the Attribute and the positional information of the data immediately before deletion is recorded as the Allocation Descriptors (AD). Since the data is to be deleted, the recorded position right before may be adapted so as not to be written. When the History Descriptor relating to the deletion of this FILE1.DAT is added, the existing History Descriptor generated when FILE1.DAT was created in the History Table becomes old information or update history information.

Though the above description has been made when the event type is of creation, revision and deletion with reference to Figs.24 through 26, a copy, transfer or name change of a file or directory, for example, may also occur on the filesystem. The update information of these events can be basically represented by combinations of the above-described creation, revision and deletion. For example, transfer of a certain file is equivalent to the combination of creating a History Descriptor representing deletion of the file at the original position before transfer and creating a History Descriptor representing creation of the file at the destination after transfer. Similarly, the title change is equivalent to the combination of creating a History Descriptor representing deletion of the file before title change and adding a History Descriptor representing creation of the file after title change.

Fig. 27 shows the way of reconstructing a History Table. History Descriptors are simply and sequentially added to the History Table each time an event such as creation, revision and deletion relating to a file or an event such as creation and deletion relating to a directory occurs in the UDF filesystem. Since the area in which History Descriptors are recorded is limited, it becomes necessary to reconstruct a History Table by deleting unnecessary information from the History Table in some situations.

In this case, checking sequentially from the History Descriptor at the last end (in the front end on the disk) of the History Table, information relating to an identical file or directory, or History Descriptors corresponding to the update history log are deleted from the History Table. History Descriptors with their Attribute being 'delete' should also be deleted.

In the example illustrated, 'FILE2.DAT CREATE' and 'FILE1.DAT CREATE' which correspond to the update history log and the History Descriptor' 'FILE1.DAT DELETE' are deleted from the History Table on the left side to reconstruct a History Table on the right side. Upon this reconstruction, the Attribute of all the remaining History Descriptors is changed to 'CREATE'.

Next, the detailed process will be explained using flowcharts. Fig. 28 shows the flow of procedures when an event such as creation, revision or deletion of a file or directory has occurred in the UDF filesystem.

As Step S70, when an event of creation, revision or deletion of a file or directory has occurred, the Primary History Table Descriptor is read out at Step S71 to grasp the rear end (the front end on the disk) of the History Table.

Specifically, it is possible to grasp the position of the rear end of the History Table from the History Table Size in the History Table. At Step S72, a History Descriptor corresponding to the file or directory is added at the rear end of the History Table. In this History Descriptor, as shown in Fig.21, the recorded position of the File Entry managing the file or directory is recorded as the LBN of FE, the type of the event occurring and either a file or directory are recorded as the Attribute with the date and time of the occurrence of the event, and the Allocation Descriptors is recorded in such a manner as to manage the fragments on the disk, which are managed by the file in the UDF filesystem in which the event has occurred. At Step S73, the Last HD Added Timestamp representing the time at which the History Descriptor was added, the number of the History Descriptors and the History Table Size at the rear end (the front end on the disk) in the Primary History Table Descriptor are updated to end the process. In the above way, the process when an event relating to a file in the UDF has occurred is performed simply by adding a History Descriptor.

Differing from the case of a file, when the entity to be backed up is a directory, it is possible to manage the existence of the directory only using a History Descriptor without recording File Size and Allocation Descriptors.

In description with this flowchart, every time an event such as creation, revision or deletion of a file or directory occurs in the UDF filesystem, a corresponding History Descriptor is added to the History Table. However, it is also possible to update the Primary History Table Descriptor by reading out the Primary History Table Descriptor at the time when, for example, the power is turned on or when the disk is mounted, and then adding the History Descriptors corresponding to all the events having occurred during the associated period at a time when the power is turned off or the disk is dismounted. In one word, History Descriptors may be kept on the memory, and the History Table on the disk can be updated at one time at a certain timing.

In this way, whenever an event relating to a file or directory occurs, a History Descriptor is added. To access a file or director in the UDF, the names of files and directories recorded in the directories should be grasped first by accessing File Identifier Descriptors. Then, based on the data of the File Identifier Descriptor corresponding to the file or directory to which access is wanted, the recorded position of the corresponding File Entry is grasped to make access to the File Entry.

Since File Entries manage the recorded positions of actual files and directories, the real data can be accessed based on this information. Next description will be made with reference to the flowchart shown in Fig.29 as to the means of accessing the History Table as the backup information in the case of emergency when an attempt of accessing a file or directory resulted in failure to access the File Entry that governs them.

At Step S80, a request for access to the History Table as the backup information occurs, the Primary History Table Descriptor is read out at Step S81 so as to grasp the size of the History Table, the number of the History Descriptors in the History Table and read out the History Table from the disk. Specifically, the number of the History Descriptors in the History Table can be known from the Number of History Descriptors in the History Table and the rear end (the front end on the disk) of the History Table can be known from the History Table Size. The read out History Table is expanded by each History Descriptor as a unit on the memory in the controller. At Step S82, the last (the newest) History Descriptor in the History Table is remarked.

At Step S83, it is judged whether the positional information (LBN) at which the File Entry of the file or directory to which access is wanted is recorded agrees with the LBN of FE of the History Descriptor being remarked. If not, it is judged at Step S84 whether all the History Descriptors have been sought. If all the History Descriptors have been scanned, this means that no search-target backup information is found and an error routine is implemented at Step S87 to end the operation. When all the History Descriptors have not yet been scanned at Step S84, the History descriptor to be remarked is shifted to the adjacent one from the one being currently remarked in the History Table at Step S85 and the operation returns to Step S83 from where the same procedure is repeated.

When the LBN of FE is determined to match the counterpart at Step S83, it is checked whether the Attribute representing the event type of the History Descriptor being remarked is 'delete' at Step S86. If the event type is 'delete', this indicates that the search-target backup information of a file or directory has been already deleted, an error routine is carried out at Step S87 to end the operation. In this case, however, if the information when the file or directory was deleted needs to be obtained, the extracted History Descriptor may be used without implementing the error routine. When the event type is other than 'delete' at Step 586, the History Descriptor being remarked is the backup information to be sought for, so the search operation is ended. Thus, it becomes possible to access the data of the file or directory based on the information from the Allocation Descriptors in the thus found History Descriptor.

In this way, when no access to the management information of a certain file or directory in the UDF filesystem can be obtained, it is possible to access the data by extracting the latest, associated History Descriptor from the History Table and grasping the location of the record of the data based on the extracted information. Further this information can be used to reconstruct UDF management information as the primary management information. For example, when a UDF File Entry managing a certain file cannot be read out, the File Entry can be recorded anew in the UDF partition based on the information of the History Descriptor corresponding to its backup information.

For the information as to the File Entry, the time of creation may be set with the time at which the File Entry is created anew, the attribute information may be set with standard one. Hence this will not completely agree with the state before the occurrence of the trouble, but it is possible to perfectly restore the information as to the recorded position of the data, which is the least sufficient information for allowing access to the data. When the recorded position of the restored UDF File Entry differs from that of the original File Entry which caused the problem, the pointer information in the File Identifier Descriptor of the UDF management information managing the recorded position of the File Entry should be updated into the recorded position of the File Entry created anew.

Referring next to the flowchart shown in Fig.30, the flow of operations when a request for reconstruction of the History Table has occurred will be explained.

When a request for reconstruction of the History Table has occurred at Step S90, the Primary History Table Descriptor is read out at Step S91 so as to grasp the size of the History Table and the number of the History Descriptors in the History Table, and read out the History Table from the disk. Specifically, the number of the History Descriptors in the History Table can be known from the Number of History Descriptor in the History Table and the rear end position of the History Table can be known from the History Table Size. The read out History Table is expanded by each History Descriptor as a unit on the memory in the controller.

At Step S92, the last History Descriptor in the History Table is remarked. At Step S93, it is judged whether all the History Descriptors in the History Table have been checked. If all the History Descriptors have been processed, the operation is ended. If the process has not yet finished, it is determined at Step S94 whether the Attribute representing the event type of the History Descriptor being remarked is 'delete'. If the event type is 'delete', the History Descriptor being remarked is added to the delete list at Step S98. Specifically, the LBN of FE of the History Descriptor being remarked is registered to the delete list. At Step S99, the History descriptor to be remarked is shifted to the adjacent one from the one being currently remarked in the History Table and the operation returns to Step S93 from where the same procedure is repeated.

At Step S94, when the event type is not 'delete', it is determined at Step S95 whether the History Descriptor being remarked is contained in the delete list. Specifically, this can be done by comparing the LBN of FE of the History Descriptor being remarked with the LBNs of FEs in the delete list. At Step S96, it is judged as to whether the History Descriptor is contained in the delete list. If it is, the operation goes to Step S99, where the History descriptor to be remarked is shifted to the adjacent one from the one being currently remarked in the History Table and the operation returns to Step S93 from where the same procedure is repeated.

When it is determined at Step S96 that the file is not contained in the delete list, the History Descriptor is added to the extraction list at Step S97. Specifically, the History Descriptor being remarked is directly copied into the extraction list. At Step S98, the History Descriptor being remarked is added to the delete list and then at Step S99, the History descriptor to be remarked is shifted to the adjacent one from the one being currently remarked in the History Table and the operation returns to Step S93 from where the same procedure is repeated.

By these procedures, redundant History Descriptors indicating the same file or directory in the History Table are deleted so that unnecessary pieces of information existing as the update history log can be deleted. Specifically, the History Descriptors remaining the extraction list when the procedures are completed present the wanted information.

Referring next to the flowchart shown in Fig.31, the flow of operations when a request for obtaining the update history log of a certain file or directory from the History Table has occurred will be explained.

When a request for obtaining the update history log of a certain file or directory from the History Table has occurred at Step S100, the Primary History Table Descriptor is read out at Step S101 so as to grasp the size of the History Table and the number of the History Descriptors in the History Table, and read out the History Table from the disk. Specifically, the number of the History Descriptors in the History Table can be known from the Number of History Descriptor in the History Table and the rear end position of the History Table can be known from the History Table Size. The read out History Table is expanded by each History Descriptor as a unit on the memory in the controller.

At Step S102, the last History Descriptor in the History Table is remarked. At Step S103, as a variable 'SEARCHKEY' representing the search target, the LBN of FE to be sought is set. LBN of FE can be known from the File Identifier Descriptor managing the target file or directory. At Step S104, it is judged whether all the History Descriptors in the History Table have been checked. If all the History Descriptors have been processed, the operation is ended.

If the process has not yet finished, it is determined at Step S105 whether the LBN of FE of the History Descriptor being remarked agrees with the target file or directory to be sought. Specifically, this can be done by comparing the SEARCHKEY with the LBN of FE in the History Descriptor being remarked. If not, the History descriptor to be remarked is shifted to the adjacent one from the one being currently remarked in the History Table at Step S107, and the operation returns to Step S104 from where the same procedure is repeated.

When the LBN of FE of the History Descriptor being remarked agrees with the file or director to be sought at Step S105, the History Descriptor currently remarked is assumed to be the update history log of the target file or directory of which update history log is wanted and is picked up for the extraction list at Step S106. At Step S107, the History Descriptor to be remarked is shifted to the adjacent one from the one being currently remarked in the History Table, and the operation returns to Step S104 fromwhere the same procedure is repeated.

At Step S107, the History Descriptor to be remarked is shifted to the adjacent one from the one being currently remarked in the History Table, and the operation returns to Step S104 from where the same procedure is repeated.

By these procedures, it is possible to simply extract all the History Descriptors relating to a file or directory of which update history log is wanted to be obtained from the History Table. Specifically, the History Descriptors remaining on the extraction list when the procedures are completed present the requested information.

In the above-described History Table, when the file or directory to be accessed is known beforehand, the process can be achieved by only searching for the corresponding History Descriptors contained in the History Table. There is a possibility that the management information of the filesystem to be backed up cannot be read out at all from the disk and hence it becomes impossible to know what kinds of files are recorded or in what directory structure the filesystem is configured. If such a situation occurs, the History Table should be reconstructed so that the remained History Descriptors can be referred to, whereby it becomes possible to access the file body and restore the management information by using the backup information.

Referring next to the flowchart shown in Fig.32, the procedures to restore the management information based on the backup information when a File Entry managing a file or directory can not be accessed in the UDF filesystem will be explained.

When the state of a File Entry managing a file or directory in the UDF filesystem being inaccessible is detected at Step S110, by, for example, physical failure of reading out the File Entry, or due to a wrong checksum value or wrong CRC information recorded in the header information of the File Entry even if the File Entry can be read, the LBN of FE representing the recorded position of the File Entry of the file or directory in question should be designated at Step S111 so as to extract the corresponding History Descriptor as the backup information from the History Table. The specific method of extraction is that already described. At Step S112, the File Entry is regenerated from the information of the extracted History Descriptor. For the purpose, the content of the Allocation Descriptors contained in the History Descriptor is copied into this File Entry. The Allocation Descriptors holds the information as to the recorded position of the data corresponding to the file. Since the positional information for reading out the data can be known if this information exists, it becomes possible to read out the data. The regenerated File Entry is recorded onto the disk. At Step S113, the ICB field of the File Identifier Descriptor of the UDF managing the recorded position of the File Entry which could not be accessed is updated so as to manage the recorded position of the File Entry recorded anew. When the regenerated File Entry was recorded at the same position as the File Entry which could not be read out, the above update does not need to be done.

In the second embodiment, as the identification information for identifying a file or directory to be backed up by management of History Descriptors, no file name or directory name is used but the information of the recorded position of the management information on the recording medium is used. Therefore, it is possible to access the real body of the file based on the backup information only. However, it is impossible to reconstruct the filename and directory hierarchy. That is, it is usually necessary to be able to access the information of File Identifier Descriptors that govern the recorded positions of File Entries corresponding to the names of files and directories in the UDF. Therefore, once it becomes impossible to access a File Identifier Descriptor, it is impossible to restore the file name and directory hierarchy with the backup information only.

In order to solve this problem, a File Entry that manages directories and File Identifier Descriptors that manage the recorded positions and the like of File Entries corresponding to files and directories are recorded in a directory structure management information area as shown in Fig.33. Accessing the management information recorded in this area makes it possible to easily grasp the files and directory hierarchy recorded on the disk. Since no File Entry that governs the real file body is recorded in this area, it is possible to minimize the required area size even if a large number of files are created. This is because the size of data of each File Identifier Descriptor is small. For example, one File Entry that manages a file will occupy one logical block (2KB) on the disk, whereas one File Identifier Descriptor for a 12 character filename needs only 52 bytes. That is, approximately 39 files can be managed by File Identifier Descriptors that amount to 2KB.

For example, as shown in Fig.33, the above management information area may be duplicated onto the area that directly follows so that the duplicated area is managed as a file. This backup file of the directory structure management information area should be given with a particular name, whereby it is possible to access the backup of the UDF management information that manages the directory structure. As another means, this management information backup may be recorded outside the UDF partition, i.e., in a dedicated area which is located in a fixed recording position, instead of managing it as a file. In either case, File Identifier Descriptors are replicated, therefore in case a File Identifier Descriptor becomes inaccessible, accessing the backup of the directory structure management information makes it possible to solve the problem.

In the first and second embodiments of the present invention, the History Table is recorded in the dedicated backup area reserved on the disk. However, this information may be recorded as a normal file inside the filesystem to be backed up instead of using a dedicated area. Use of such a configuration makes reservation of the dedicated backup area unnecessary and enables the information to be recorded as a file, so that the History Table as the backup information can be recorded at any arbitrary site on the disk. It is also possible to store the contents of the History Table into a non-volatile semiconductor memory. As in this case where the History Table is recorded in a medium different from the recording medium where the real data is recorded, the History Table should be recorded together with the information as to identifying the medium in which the corresponding filesystem is recorded, to thereby make it possible to establish correspondence between the disk medium and the History Table.

### Industrial Applicability

As has been described heretofore, the file management method according to the present invention is suited to creating a backup of the management information recorded on a recording medium, particularly to AV-oriented devices such as video cameras, which are expected to be used under hard conditions.

## Claims

1. A file management method performed by a recording device which is arranged to record input data as a file on a recording medium (6) using a filesystem and to manage each file based on management information at least including recorded positional information of the file on the recording medium, wherein a same area (UDF partition) of the filesystem stores the file and the management information, such that the management information is scattered in said same area and is not clearly separated from the file, the method including the steps of:
creating in succession history information (HD) as to a file each time an action of addition, revision or deletion of the file on a said recording medium is effected, each history information including recorded positional information of the file on the recording medium and a type of the action on the file, related with file identification information of the file; and
recording successively the history information (HD) in a history table area (Backup Area) provided separately from said same area (UDF partition), in the order in which the history information (HD) have been created.

2. The file management method according to claim 1, wherein the file identification information recorded in the history table area (Backup Area) each time the action of addition, revision or deletion of the file on the recording medium (6) is effected includes recorded positional information of management information that manages the file, on the recording medium (6).

3. The file management method according to claim 1, wherein the history information (HD) recorded in the history table area (Backup Area) each time the action of addition, revision or deletion of the file on the recording medium (6) is effected includes recorded positional information of management information that manages the file, on the recording medium (6).

4. The file management method according to any one of claims 1 to 3, wherein the file identification information recorded on the history table area (Backup Area) each time the action of addition, revision or deletion of the file on the recording medium (6) is effected includes a file name of the file or a file ID of the file.

5. The file management method according to any one of claims 1 to 4, wherein the history information (HD) is created on a memory (3) in the recording device in succession each time the action of addition, revision or deletion of the file on the recording medium (6) is effected,
wherein the history information (HD) is recorded into the history table area (Backup Area) on the recording medium (6) when a recording medium ejection command for ejecting the recording medium (6) is given to the recording device.

6. The file management method according to any one of claims 1 to 4, wherein the history information (HD) is created on a memory (3) in the recording device in succession each time the action of addition, revision or deletion of the file on the recording medium (6) is effected,
wherein the history information (HD) is recorded into the history table area (Backup Area) on the recording medium (6) when a power supply cut command for cutting off the power supply to the memory (3) is given to the recording device.

7. The file management method according to any one of claims 1 to 6, wherein based on a history table check command of history check as to the history table, only the history information (HD) having a designated file identification information is extracted from all the history information (HD) recorded in the history table area (Backup Area).

8. The file management method according to any one of claims 1 to 7, wherein based on a history table reconstruction command of reconstructing the history table, the history table area (Backup Area) is reduced by integrating the history information (HD) having the same file identification information among all the history information (HD) recorded in the history table area (Backup Area), into history information (HD) in accordance with their action types.

9. The file management method according to any one of claims 1 to 8, wherein the management information includes management information of a directory, further comprising the steps of:
creating in succession history information (HD) as to the directory each time an action of addition or deletion of directory information on the recording medium is effected (6), each history information (HD) including a type of the action related with identification information of the directory; and
recording additionally in succession the history information (HD) into the history table area (Backup Area).

10. The file management method according to any one of claims 1 to 9, wherein, in the case where the management information of the file cannot be read out when the file is tried to be read out by searching the management information in accordance with a file readout command, the latest history information having the file identification information of the file is read out from the history table area (Backup Area) so as to read out the file based on the history information (HD).

11. The file management method according to any one of claims 1 to 10, wherein, based on a management information reconstruction command of reconstructing management information, the history information (HD) is read out from the history table area (Backup Area) so as to generate management information based on the history information (HD) and record the management information onto the recording medium (6).

## Patentansprüche

1. Dateimanagement-Verfahren, das durch eine Aufzeichnungsvorrichtung ausgeführt wird, die dazu ausgelegt ist, Eingangsdaten als eine Datei auf ein Aufzeichnüngsmedium (6) unter Verwendung eines Dateisystems aufzuzeichnen und jede Datei anhand von Managementinformationen, die wenigstens aufgezeichnete Positionsinformationen der Datei auf dem Aufzeichnungsmedium enthalten, zu managen, wobei derselbe Bereich (UDF-Partition) des Dateisystems die Datei und die Managementinformationen speichert, derart, dass die Managementinformationen im gelben Bereich veratreut sind und nicht klar von der Datei getrennt sind, wobei das Verfahren die folgenden Schritte enthält:
nacheinander Erzeugen von Historieninformationen (HD) bezüglich einer Datei jedesmal, wenn eine Aktion des Hinzufügens, Überarbeitens oder Löschens der Datei auf dem Aufzeichnungsmedium ausgeführt wird, wobei alle Historieninformationen jeweils aufgezeichnete Positionsinformationen der Datei auf dem Aufzeichnungsmedium und einen Typ der Aktion an der Datei enthalten, in Beziehung stehend mit Dateiidentifizierungsinformationen; und
nacheinander Aufzeichnen der Historieninformationen (HD) in einem Historientabellenbereich (Sicherungsbereich), der getrennt von demselben Bereich (UDF-Partition) vorgesehen ist, in der Reihenfolge, in der die Historieninformationen (HD) erzeugt worden sind.

2. Dateimanagementverfahren nach Anspruch 1, wobei die Dateiidentifizie rungsinformationen, die in dem Historientabellenbereich (Sicherungsbereich) jedesmal aufgezeichnet werden, wenn die Aktion des Hinzufügens, Überarbeitens oder Löschens der Datei auf dem Aufzeichnungsmedium (6) ausgeführt wird, aufgezeichnete Positionsinformationen der Managementinformationen, die die Datei managen, auf dem Aufzeichnungsmedium (6) enthalten.

3. Dateimanagermentverfahren nach Anspruch 1, wobei die Historieninformationen (HD), die in dem Historientabellenbereich (Sicherungsbereich) jedesmal aufgezeichnet werden, wenn die Aktion des Hinzufügens, Überarbeitens oder Löschens der Datei auf dem Aufzeichnungsmedium (6) ausgeführt wird, aufgezeichnete Positionsinformationen der Managementinformationen, die die Datei managen, auf dem Aufzeichnungsmedium (6) enthalten.

4. Dateimanagementverfahren nach einem der Ansprüche 1 bis 3, wobei die Dateiidentifizierungsinformationen, die in dem Historientabellenbereich (Sicherungsbereich) jedesmal aufgezeichnet werden, wenn die Aktion des Hinzufügens, Überarbeitens oder Löschens der Datei auf dem Aufzeichnungsmedium (6) ausgeführt wird, einen Dateinamen der Datei oder eine Datei-ID der Datei enthalten.

5. Dateimanagementverfahren nach einem der Ansprüche 1 bis 4, wobei die Historieninformationen (HD) in einem Speicher (3) in der Aufzeichnungsvorrichtung nacheinander jedesmal erzeugt werden, wenn die Aktion des Hinzufügens, Überarbeitens oder Löschens der Datei auf dem Aufzeichnungsmedium (6) ausgeführt wird,
wobei die Historieninformationen (HD) in den Historientabellenbereich (Sicherungsbereich) auf dem Aufzeichnungsmedium (6) aufgezeichnet werden, wenn ein Aufzeichnungsmediumaüswurf-Befehl zum Auswerfen des Aufzeichnungsmediums (6) an die Aufzeichnungsvorrichtung ausgegeben wird.

6. Dateimanagementverfahren nach einem der Ansprüche 1 bis 4, wobei die Historieninformationen (HD) in einem Speicher (3) in der Aufzeichnungsvorrichtung nacheinander jedesmal erzeugt werden, wenn die Aktion des Hinzufügens, Überarbeitens oder Löschen" der Datei auf dem Aufzeichnungsmedium (6) ausgeführt wird,
wobei die Historieninformationen (HD) in den Historientabellenbereich (Sicherungsbereich) auf dem Aufzeichnungsmedium (6) aufgezeichnet werden, wenn ein Stromversorgungs-Unterbrechungsbefehl zum Unterbrechen der Stromversorgung für den Speicher (3) zu der Aufzeichnungsvorrichtung ausgegeben wird.

7. Dateimanagementverfahren nach einem der Ansprüche 1 bis 6, wobei anhand eines Historientabellen-Prüfbefehls zur Historienprüfung bezüglich der Historientabelle nur die Historieninformationen (HD), die bezeichnete Dateiidentifizierungsinformationen besitzen, aus sämtlichen Historieninformationen (HD), die in den Historientabellenbereich (Sicherungsbereich) aufgezeichnet sind, extrahiert werden.

8. Dateimanagementverfahren nach einem der Ansprüche 1 bis 7, wobei anhand eines Historientabellen-Rekonstruktionsbefehls zum Rekonstruieren der Historientabelle der Historientabellenbereich (Sicherungsbereich) durch Integrieren der Historieninformationen (HD) mit denselben Dateiidentifizierungsinformationen unter sämtlichen Historieninformationen (HD), die in dem Historientabellenbereich (Sicherungsbereich) aufgezeichnet sind, zu Historieninformationen (HD) in Übereinstimmung mit ihren Aktionstypen reduziert wird.

9. Dateimanagementverfahren nach einem der Ansprüche 1 bis 8, wobei die Managementinformationen Managementinformationen eines Verzeichnisses enthalten, ferner mit den folgenden Schritten;
nacheinander Erzeugen von Historieninformationen (HD) bezüglich des Verzeichnisses jedesmal, wenn eine Aktion des Hinzufügens oder Löschens von Verzeichnisinformationen auf dem Aufzeichnungsmedium (6) ausgeführt wird, wobei jede Historieninformation (HD) einen Typ der Aktion, die mit den Identifizierungsinformationen des Verzeichnisses in Beziehung steht, enthält; und
außerdem nacheinander Aufzeichnen der Historieninformationen (HD) in den Historientabellenbereich (Sicherungsbereich).

10. Dateimanagementverfahren nach einem der Ansprüche 1 bis 9, wobei in dem Fall, in dem die Managementinformationen der Datei nicht ausgelesen werden können, wenn versucht wird, die Datei auszulesen, indem die Managementinformationen in Übereinstimmung mit einem Dateiauslesebefehl gesucht werden, die letzten Historieninformationen, die die Dateiidentifizierungsinformationen der Datei besitzen, aus dem Historientabellenbereich (Sicherungsbereich) ausgelesen werden, um die Datei anhand der Historieninformationen (HD) auszulesen.

11. Dateimanagementverfahren nach einem der Ansprüche 1 bis 10, wobei anhand eines Managementinformations-Rekonstruktionsbefehls zum Rekonstruieren der Managementinformationen die Historieninformationen (HD) aus dem Historientabellenbereich (Sicherungsbereich) ausgelesen werden, um anhand der Historieninformationen (HD) Managementinformationen zu erzeugen und die Managementinformationen auf das Aufzeichnungsmedium (6) aufzuzeichnen.

## Revendications

1. Procédé de gestion de fichier mis en oeuvre par un dispositif d'enregistrement qui est conçu pour enregistrer des données d'entrée sous la forme d'un fichier sur un support d'enregistrement (6) à l'aide d'un système de fichier et pour gérer chaque fichier sur la base d'informations de gestion comprenant au moins des informations de position enregistrées du fichier sur le support d'enregistrement, dans lequel une même zone (partition UDF) du système de fichier mémorise le fichier et les informations de gestion, de sorte que ces dernières sont dispersées dans ladite même zone et ne sont pas clairement séparées du fichier, procédé comprenant les étapes :
de création, de manière successive, d'informations d'historique (HD) concernant un fichier chaque fois qu'une action d'ajout, de révision ou de suppression du fichier sur ledit support d'enregistrement est effectuée, les informations d'historique comprenant à chaque fois des informations de position enregistrées du fichier sur le support d'enregistrement et un type de l'action effectuée sur le fichier, relativement à des informations d'identification du fichier ; et
d'enregistrement des informations d'historique (HD) de manière successive dans une zone de table d'historique (zone de sauvegarde) fournie séparément de ladite même zone (partition UDF), dans l'ordre dans lequel les informations d'historique (HD) ont été créées.

2. Procédé de gestion de fichier conformément à la revendication 1, dans lequel les informations d'identification de fichier enregistrées dans la zone de table d'historique (zone de sauvegarde) chaque fois que l'action d'ajout, de révision ou de suppression du fichier sur le support d'enregistrement (6) est effectuée, comprend des informations de position enregistrées d'informations de gestion qui gèrent le fichier, sur le support d'enregistrement (6).

3. Procédé de gestion de fichier conformément à la revendication 1, dans lequel les informations d'historique (HD) enregistrées dans la zone de table d'historique (zone de sauvegarde) chaque fois que l'action d'ajout, de révision ou de suppression du fichier sur le support d'enregistrement (6) est effectuée comprennent des informations de position enregistrées d'informations de gestion qui gèrent le fichier, sur le support d'enregistrement (6).

4. Procédé de gestion de fichier conformément à l'une quelconque des informations 1 à 3, dans lequel les informations d'identification de fichier enregistrées sur la zone de table d'historique (zone de sauvegarde) chaque fois que l'action d'ajout, de révision ou de suppression du fichier sur le support d'enregistrement (6) est effectuée comprend un nom de fichier du fichier ou un identificateur de fichier du fichier.

5. Procédé de gestion de fichier conformément à l'une quelconque des revendications 1 à 4, dans lequel les informations d'historique (HD) sont créées successivement sur une mémoire (3) dans le dispositif d'enregistrement chaque fois que l'action d'ajout, de révision ou de suppression du fichier sur le support d'enregistrement (6) est effectuée,
dans lequel les informations d'historique (HD) sont enregistrées dans la zone de table d'historique (zone de sauvegarde) sur le support d'enregistrement (6) lorsqu'une instruction d'éjection de support d'enregistrement pour éjecter le support d'enregistrement (6) est donnée au dispositif d'enregistrement.

6. Procédé de gestion de fichier conformément à l'une quelconque des revendications 1 à 4, dans lequel les informations d'historique (HD) sont créées successivement sur une mémoire (3) dans le dispositif d'enregistrement chaque fois que l'action d'ajout, de révision ou de suppression du fichier sur le support d'enregistrement (6) est effectuée,
dans lequel les informations d'historique (HD) sont enregistrées dans la zone de table d'historique (zone de sauvegarde) sur le support d'enregistrement (6) lorsqu'une instruction de coupure d'alimentation électrique pour couper l'alimentation d'électricité vers la mémoire (3) est donnée au dispositif d'enregistrement.

7. Procédé de gestion de fichier conformément à l'une quelconque des revendications 1 à 6, dans lequel, sur la base d'une instruction de vérification de table d'historique de vérification d'historique concernant la table d'historique, seules les informations d'historique (HD) comprenant des informations d'identification de fichier désigné sont extraites de la totalité des informations d'historique (HD) enregistrées dans la zone de table d'historique (zone de sauvegarde).

8. Procédé de gestion de fichier conformément à l'une quelconque des revendications 1 à 7, dans lequel, sur la base d'une instruction de reconstruction de table d'historique de reconstruction de la table d'historique, la zone de table d'historique (zone de sauvegarde) est réduite par intégration des informations d'historique (HD) comprenant les mêmes informations d'identification de fichier parmi toutes les informations d'historique (HD) enregistrées dans la zone de table d'historique (zone de sauvegarde), dans les informations d'historique (HD) conformément à leurs types d'action.

9. Procédé de gestion de fichier conformément à l'une quelconque des revendications 1 à 8, dans lequel les informations de gestion comprennent des informations de gestion d'un répertoire, procédé comprenant en outre les étapes :
de création d'informations d'historique (HD) de manière successive concernant le répertoire chaque fois qu'une action d'ajout ou de suppression d'informations de répertoire sur le support d'enregistrement (6) est effectuée, les informations d'historique (HD) comprenant à chaque fois un type de l'action associée à des informations d'identification du répertoire ; et
d'enregistrement supplémentaire des informations d'historique (HD) de manière successive dans la zone de table d'historique (zone de sauvegarde).

10. Procédé de gestion de fichier conformément à l'une quelconque des revendications 1 à 9, dans lequel, dans le cas où les informations de gestion du fichier ne peuvent pas être lues lorsque le fichier fait l'objet d'une tentative de lecture par recherche des informations de gestion conformément à une instruction de lecture de fichier, les dernières informations d'historique comprenant les informations d'identification de fichier du fichier sont lues dans la zone de table d'historique (zone de sauvegarde) de manière à lire le fichier sur la base des informations d'historique (HD).

11. Procédé de gestion de fichier conformément à l'une quelconque des revendications 1 à 10, dans lequel, sur la base d'une instruction de reconstruction d'informations de gestion d'informations de gestion de reconstruction, les informations d'historique (HD) sont lues dans la zone de table d'historique (zone de sauvegarde) de manière à générer des informations de gestion sur la base des informations d'historique (HD) et à enregistrer les informations de gestion sur le support d'enregistrement (6).
